Europäisches Patentamt

European Patent Office

Office européen des brevets

(19)

(11) **EP 1 299 861 B1**

(12) **FASCICULE DE BREVET EUROPEEN**

(45) Date de publication et mention
de la délivrance du brevet:
**05.07.2006 Bulletin 2006/27**

(51) Int Cl.:
***G06T 15/70*** (2006.01)

(21) Numéro de dépôt: **01955400.5**

(86) Numéro de dépôt international:
**PCT/FR2001/002236**

(22) Date de dépôt: **11.07.2001**

(87) Numéro de publication internationale:
**WO 2002/007101 (24.01.2002 Gazette 2002/04)**

(54) **PROCEDE D'ANIMATION FACIALE**

VERFAHREN ZUR GESICHTSANIMATION

FACIAL ANIMATION METHOD

(84) Etats contractants désignés:
**AT BE CH CY DE DK ES FI FR GB GR IE IT LI LU
MC NL PT SE TR**

(30) Priorité: **13.07.2000 FR 0009437**

(43) Date de publication de la demande:
**09.04.2003 Bulletin 2003/15**

(73) Titulaires:
• **FRANCE TELECOM**
**75015 Paris (FR)**
• **TELEDIFFUSION DE FRANCE**
**75015 Paris (FR)**

(72) Inventeurs:
• **BRETON, Gaspard**
**F-35760 Saint Gregoire (FR)**
• **BOUVILLE, Christian**
**F-35770 Vern sur Seiche (FR)**
• **PELE, Danielle**
**F-35235 Thorigne-Fouillard (FR)**

(74) Mandataire: **Cabinet Martinet & Lapoux
43, boulevard Vauban,
B.P. 405 Guyancourt
78055 St. Quentin Yvelines Cédex (FR)**

(56) Documents cités:
• **TERZOPOULOS D ET AL: "ANALYSIS AND
SYNTHESIS OF FACIAL IMAGE SEQUENCES
USING PHYSICAL AND ANATOMICAL MODELS"
IEEE TRANSACTIONS ON PATTERN ANALYSIS
AND MACHINE INTELLIGENCE,US,IEEE INC.
NEW YORK, vol. 15, no. 6, 1 juin 1993 (1993-06-01),
pages 569-579, XP000369961 ISSN: 0162-8828**

• **K. WATERS: "A muscle model for animating
three-dimensional facial expression"
COMPUTER GRAPHICS, vol. 21, no. 4, 1 juillet
1987 (1987-07-01), pages 17-24, XP000989415**
• **YUONG-WEI L ET AL: "A three-dimensional
muscle-based facial expression synthesizer for
model-based image coding" SIGNAL
PROCESSING. IMAGE COMMUNICATION,NL,
ELSEVIER SCIENCE PUBLISHERS,
AMSTERDAM, vol. 8, no. 4, 1 mai 1996
(1996-05-01), pages 353-363, XP004069966 ISSN:
0923-5965**
• **GANG XU ET AL: "THREE-DIMENSIONAL FACE
MODELING FOR VIRTUAL SPACE
TELECONFERENCING SYSTEMS"
TRANSACTIONS OF THE INSTITUTE OF
ELECTRONICS, INFORMATION AND
COMMUNICATION ENGINEERS OF JAPAN,JP,
INST. OF ELECTRONICS & COMMUNIC.
ENGINEERS OF JAPAN. TOKYO, vol. E73, no. 10,
1 octobre 1990 (1990-10-01), pages 1753-1761,
XP000176466**
• **WATERS,K. ; FRIESBIE, J.: "A coordinated
muscle model for speech animation" PROC.
GRAPHICS INTERFACE '95, 17 mai 1995
(1995-05-17), pages 163-170, XP000997816
Quebec, Canada**
• **YUENCHENG LEE ET AL: "REALISTIC
MODELING FOR FACIAL ANIMATION"
COMPUTER GRAPHICS PROCEEDINGS
(SIGGRAPH),US,NEW YORK, IEEE, 6 août 1995
(1995-08-06), pages 55-62, XP000546216 ISBN:
0-89791-701-4**

EP 1 299 861 B1

**Description**

La présente invention concerne un procédé d'animation faciale en trois dimensions mis en oeuvre dans un moyen de traitement de données comprenant un moteur pour animer la tête d'un locuteur initialement mémorisée et analysée. Par exemple, le moyen de traitement de données est relatif à la téléconférence, le télétravail ou le travail collaboratif, ou bien à des agents intelligents pour lire des pages de courrier électronique, ou bien encore à des assistants virtuels avec des applications de commerce électronique.

Selon la technique antérieure, la plupart des moteurs d'animation ne sont pas musculaires et bien souvent l'animation faciale est réalisée par morphing entre des expressions clés de la tête réalisées à la main par des artistes. Les moteurs d'animation musculaire sont en général plus complets mais ne prennent pas en compte l'élasticité de la peau, ce qui empêche toute animation de la tête en temps-réel.

Un moteur d'animation musculaire est intéressant pour sa facilité à décrire une animation en un ensemble de contractions musculaires, la tête étant structurée en des ensembles de mailles prédéterminés, par exemple les lèvres, les yeux, les paupières, etc. Ces ensembles de contractions sont souvent généralisables de visages en visages. Par exemple, un sourire est toujours obtenu par contraction des muscles zygomatiques agissant sur les commissures des lèvres.

Par exemple, Keith WATER dans ses articles "A Muscle Model for Animating Three-Dimensional Facial Expression", Computers Graphics , vol. 21, no. 4, juillet 1987, pages 17-24, et "Analysis and Synthesis of Facial Image Sequences Using Physical and Anatomical Models", IEEE Transactions on Pattern Analysis and Machine Intelligence, No. 6, pages 569 à 579, 15 Juin 1993, préconise une animation faciale au moyen d'une mobilisation de muscle sous la forme d'un vecteur dans un secteur d'influence angulaire dans lequel un sommet de maille est déplacé en fonction d'un coefficient d'atténuation angulaire et d'un coefficient d'atténuation radiale.

Toutefois, dans ce type de moteur d'animation, les lèvres sont dissociées et la bouche est ouverte par rotation de la mâchoire inférieure solidaire de la lèvre inférieure. Cette rotation conduit à détruire la commissure des lèvres, ce qui ne reflète pas précisément les mouvements des lèvres indépendamment l'un de l'autre lors de la prononciation.

La présente invention vise à améliorer l'animation des lèvres sans que celle-ci soit trop complexe afin qu'elle reproduise plus fidèlement le mouvement réel correspondant des lèvres et soit réalisée en temps réel.

A cette fin, un procédé pour animer une tête imagée en trois dimensions acquise dans un moyen de traitement de données sous forme d'ensembles de mailles parmi lesquels un ensemble de lèvres, au moyen de muscles faciaux modélisés dont un premier groupe de muscles modélisés s'étent vers la lèvre supérieure pour déplacer des sommets de maille dans la lèvre supérieure et sous le nez de la tête, est caractérisé en ce qu'il comprend les étapes de :

- distinguer des lèvres inférieure et supérieure dans l'ensemble de lèvres en fonction de sommets de maille au niveau d'une frontière de commissure de lèvre et d'ouverture de bouche,
- déterminer des zones inférieure et supérieure de la tête partagées sensiblement par au moins ladite frontière, et
- constituer un premier groupe de muscles modélisés ayant des zones d'influence sécantes au moins deux à deux situées dans la zone supérieure, un deuxième groupe de muscles modélisés s'étendant vers la lèvre inférieure et ayant des zones d'influence sécantes au moins deux à deux situées dans la zone inférieure pour déplacer des sommets de maille dans la lèvre inférieure et dans le menton de la tête, et un dernier groupe de muscles modélisés ayant des zones d'influence pour déplacer chacun des sommets de maille dans les zones supérieure et inférieure afin d'étirer et rétracter les lèvres.

Grâce à la répartition de muscles modélisés en les premier, deuxième et troisième groupe indépendants entre eux et à l'influence d'au moins deux muscles sur certains sommets de maille, la bouche est ouverte d'une manière plus naturelle lors d'une diction.

Comme on le verra dans la suite, l'invention prévoit également une animation paramétrique au moyen de la détermination de paramètres pour animer au moins l'un des organes suivants : un oeil, une paupière, une mâchoire inférieure, un cou.

L'invention concerne également des systèmes client-serveur relatifs à de l'animation faciale. Selon une première réalisation, le client comprend un moyen de traitement de données ayant acquis une tête imagée en trois dimensions sous forme d'ensembles de mailles et de paramètres selon le procédé d'animation faciale conforme à l'invention, pour animer la tête en fonction de commandes d'animation. Le serveur est un serveur de traitement pour convertir des réponses lues dans une base de données adressée par des requêtes correspondant à des messages transmis par le client, en des messages et des commandes d'animation transmis au client.

Selon une deuxième réalisation du système client-serveur, le serveur est un serveur de base de données, et le client comprend un moyen de traitement de données et un moyen conversationnel. Le moyen de traitement a acquis une tête imagée en trois dimensions sous forme d'ensembles de mailles et de paramètres selon le procédé conforme à l'invention, afin d'animer la tête en fonction de commandes d'animation. Le moyen conversationnel convertit des réponses lues dans le serveur de base de données adressé par des requêtes correspondant à des messages fournies dans le client, en des messages appliqués dans le client et des commandes d'animation transmises au moyen de traitement de données.

Les ensembles de mailles et les paramètres sont de préférence sélectionnés et acquis depuis un serveur prédéterminé.

D'autres caractéristiques et avantages de la présente invention apparaîtront plus clairement à la lecture de la description suivante de plusieurs réalisations préférées de l'invention en référence aux dessins annexés correspondants dans lesquels :

- la figure 1 est une vue maillée de face d'une tête ;
- la figure 2 est une vue maillée de profil de la tête ;
- la figure 3 est un algorithme du procédé d'animation faciale selon une réalisation préférée de l'invention ;
- la figure 4 est une vue maillée de face des lèvres de la tête ;
- la figure 5 est un algorithme de distinction des lèvres inférieure et supérieure ;
- la figure 6 est une vue de face analogue à la figure 1, sans la chevelure de la tête, montrant l'emplacement de muscles faciaux ;
- la figure 7 est un tableau indiquant les fonctions de muscles faciaux montrés à la figure 6 et contrôlant le mouvement des lèvres, ainsi que des zones d'influence de ces muscles par rapport aux zones inférieure et supérieure ;
- la figure 8 est un algorithme de détermination de zones inférieure et supérieure de la tête, inclus dans l'algorithme de la figure 3 ;
- la figure 9 est une vue analogue à la figure 1, sans chevelure, montrant la séparation entre les zones inférieure et supérieure au niveau des lèvres ;
- la figure 10 est un graphe de la zone d'influence d'un muscle pour expliquer le déplacement de sommets de maille lors de la contraction du muscle;
- les figures 11A et 11B sont des graphes d'une zone d'influence maillée lorsque le muscle correspondant est contracté de 20% et 60% respectivement ;
- la figure 12 est un tableau indiquant les fonctions de muscles frontaux montrés à la figure 6 ainsi que des zones d'influence de ces muscles par rapport aux zones inférieure et supérieure ;
- les figures 13A et 13B montrent l'influence de trois muscles respectivement après une contraction de 20 % et une contraction de 60 % sur des déplacements de sommets de maille communs à leurs zones d'influence afin de montrer une impossibilité de déplacement de sommets de maille qu'évite l'invention;
- la figure 14 est un tableau de répartition de muscles faciaux en des groupes en vue de leur contribution additionnelle ou indépendante à des déplacements de sommets de maille;
- les figures 15 et 16 sont des graphes en coupe axiale d'une variante de zone d'influence à base ellipsoïdale d'un muscle, respectivement contenant le vecteur modélisant le muscle et perpendiculaire à ce vecteur ;

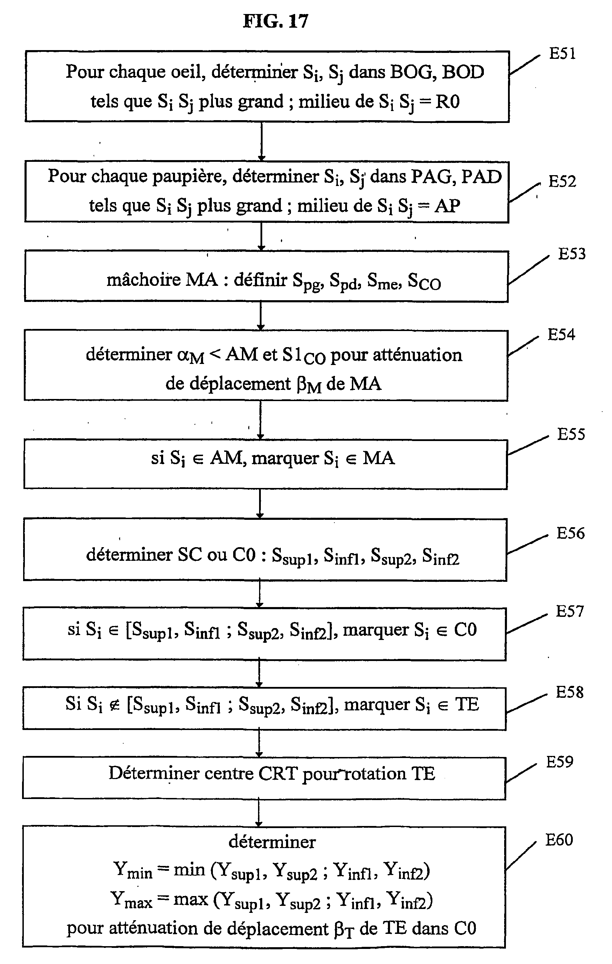

- la figure 17 est un algorithme de détermination de paramètres pour une animation d'yeux, de paupières, d'une mâchoire inférieure et d'un cou de la tête ; et
- les figures 18 et 19 sont des blocs-diagrammes schématiques de deux réalisations d'un système client-serveur pour animation faciale selon l'invention.

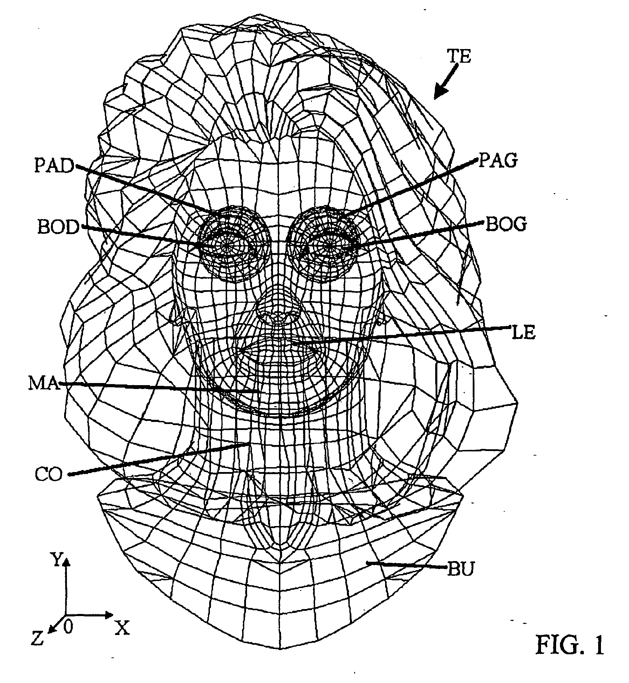

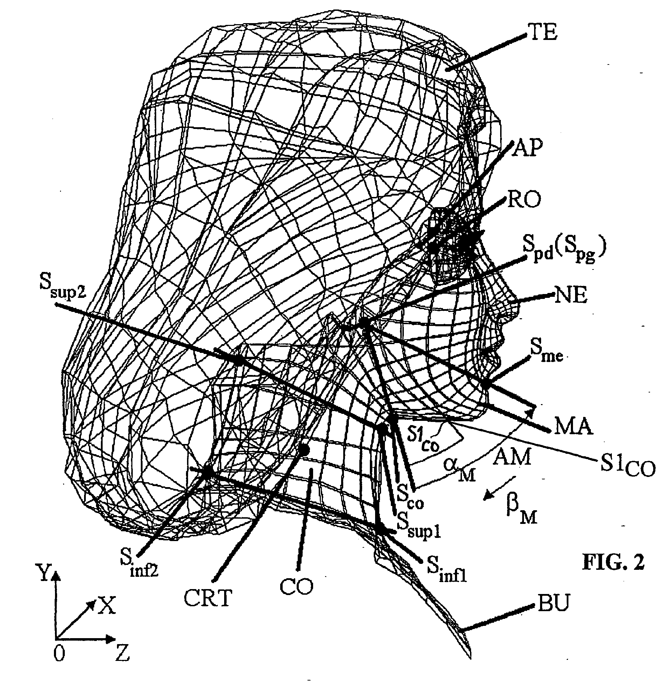

Le procédé d'animation faciale selon l'invention est mis en oeuvre dans un moteur d'animation implémenté dans un moyen de traitement de données, qui est installé par exemple dans un ordinateur personnel ou dans un serveur multimédia du réseau internet, ou bien dans un terminal de téléconférence ou de télétravail qui a reçu l'image en trois dimensions de la tête TE d'un locuteur faisant face au terminal afin de la transmettre vers le terminal d'un locuteur distant pendant la téléconférence. Selon une autre variante, un assistant virtuel installé dans une borne publique donnant accès à des bases de données par exemple commerciales et touristiques a mémorisé l'image en trois dimensions de la tête TE d'une opératrice-animatrice afin de la visualiser pendant l'écoute d'informations. Comme montré aux figures 1 et 2, respectivement en vue de face sur un plan XOY et en vue de profil droit sur un plan YOZ, la tête TE du locuteur ou de l'opératrice a été acquise par le moyen de traitement de données sous la forme d'une image maillée en trois dimensions produite par un scanner ou déduite à partir d'une ou plusieurs photos de la tête analysée par un logiciel n'appartenant pas au cadre de l'invention.

Initialement à une étape E0, la tête TE est définie superficiellement par plusieurs ensembles de mailles polygonales essentiellement triangulaires et quadrilatérales dans lesquelles peuvent être appliquées des animations respectives. Toutefois, le buste BU revêtu de vêtements n'est généralement pas animé. Par exemple, les ensembles de mailles triangulaires sont notamment la peau du visage, les lèvres LE, les paupières supérieures droite et gauche PD et PG, et les blancs de l'oeil gauche BOG et de l'oeil droit BOD.

Dans la suite de la description, $S_i$ et $S_j$ désignent deux sommets de maille quelconques.

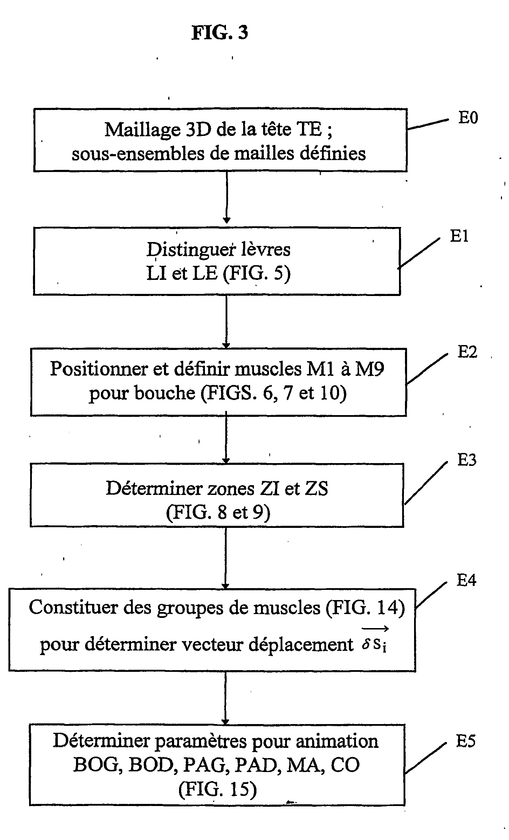

Comme montré à la figure 3, le procédé d'animation faciale implémenté sous forme de logiciel dans le moyen de traitement de données comprend l'étape initiale E0 relative au maillage superficiel du visage en trois dimensions, telle que décrite précédemment, suivie par des étapes E1 à E5 propres à l'invention. Ce procédé permet en temps réel et automatiquement d'animer la tête et particulièrement le visage du locuteur ou de l'opératrice en fonction d'une analyse de la voix de celui-ci ou d'un texte de manière à traduire des phonèmes par une animation du visage du locuteur ou de l'opératrice. Pour cette animation, le déplacement des lèvres est essentiel.

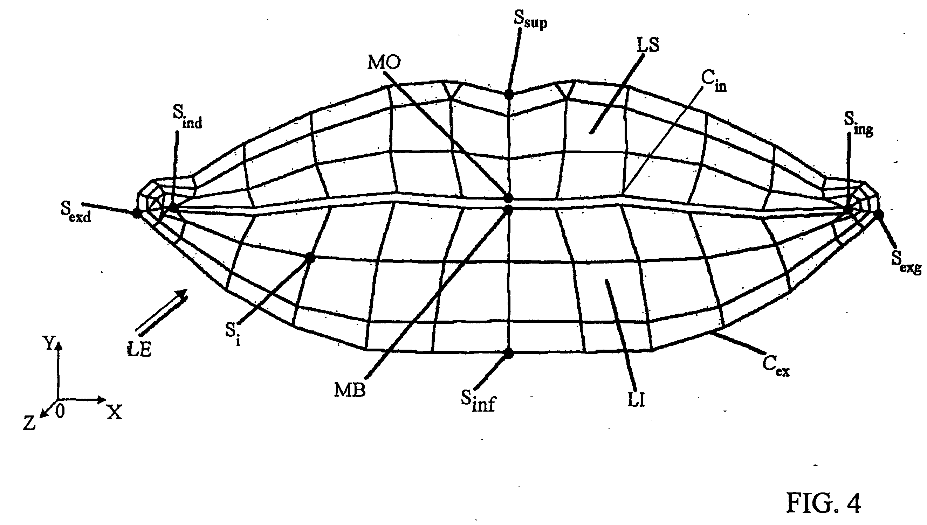

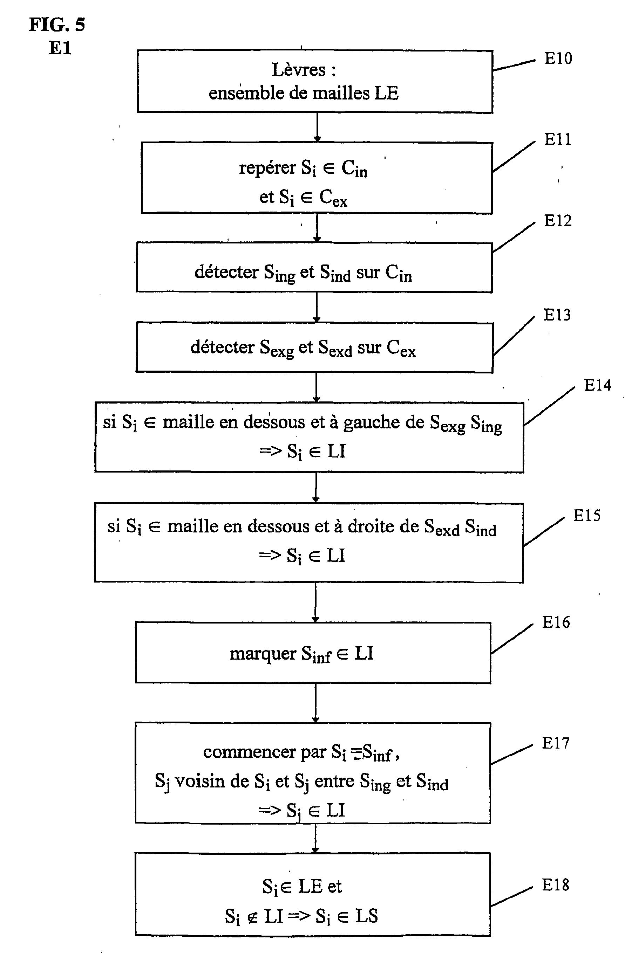

L'ensemble de mailles triangulaires LE comprenant une lèvre inférieure LI et une lèvre supérieure LS est montré en détail à la figure 4, en vue de face par projection de cet ensemble suivant l'axe OZ dans le plan XOY. Conformément à l'invention, l'étape E1 distingue la lèvre inférieure LI et la lèvre supérieure LS de manière à animer les lèvres séparément, selon l'algorithme montré à la figure 5. Cet algorithme de distinction de lèvres comprend des étapes E11 à E18. A une étape initiale E10 incluse dans l'étape E0, toutes les coordonnées des sommets des mailles triangulaires de l'ensemble LE sont connues.

A la première étape E11, les sommets de maille $S_i$ à la périphérie interne de l'ensemble LE sont repérés pour définir le contour intérieur $C_{in}$ de l'ensemble de lèvres LE entourant une légère ouverture de bouche BO entre les lèvres au repos et les commissures aux extrémités des lèvres. Les sommets de maille à la périphérie externe de l'ensemble LE sont repérés pour définir le contour extérieur $C_{ex}$ de l'ensemble LE des lèvres inférieure et supérieure en passant par les commissures.

A l'étape E12, des sommets $S_{ing}$ et $S_{ind}$ les plus extrêmes latéralement suivant l'axe OX des abscisses, c'est-à-dire les plus à gauche et à droite, sont détectés sur le contour intérieur $C_{in}$. De même, à l'étape E13, des sommets $S_{exg}$ et $S_{exd}$ les plus extrêmes latéralement suivant l'axe OX des abscisses, c'est-à-dire les plus à gauche et à droite, sont détectés sur le contour extérieur $C_{ex}$ ; un autre sommet $S_{inf}$ correspondant à la plus petite ordonnée sur le contour extérieur $C_{ex}$ est également détecté.

Les couples de sommets gauches ($S_{ing}$, $S_{exg}$) et droits ($S_{ind}$, $S_{exd}$) matérialisent ainsi les commissures gauche et droite des lèvres.

Puis tous les sommets de maille situés à gauche du sommet de gauche de contour interne $S_{ing}$ dans' la figure 4 et strictement inférieurs en ordonnée Y au segment de commissure gauche $S_{exg} S_{ing}$ ayant les extrémités précédemment détectées sont marqués comme étant des sommets, appartenant à la lèvre inférieure LI à l'étape E14. De même, tous les sommets de maille situés à droite du sommet de droite de contour interne $S_{ind}$ dans la figure 4 et strictement inférieurs en ordonnée Y au segment de commissure droite $S_{exd} S_{ind}$ ayant les extrémités précédemment détectées sont marqués comme étant des sommets appartenant à la lèvre inférieure LI à l'étape E15. Ainsi, aux étapes E14 et E15 sont marqués les sommets de maille strictement inférieurs à l'un des segments de commissure $S_{exg} S_{ing}$ comme appartenant à la lèvre inférieure LI.

A l'étape suivante E16, le sommet inférieur $S_{inf}$ est marqué comme étant un sommet appartenant à la lèvre inférieure LI.

A l'étape E17, tous les sommets de maille non marqués, c'est-à-dire n'étant pas au niveau de l'ouverture de bouche BO et ayant une abscisse X comprise entre les abscisses des sommets de contour interne des lèvres $S_{ing}$ et $S_{ind}$, en commençant par des sommets voisins du sommet inférieur $S_{inf}$ de la lèvre inférieure LI et en inondant progressivement la lèvre inférieure jusqu'aux segments de commissure de lèvres, sont marqués récursivement comme appartenant à la lèvre inférieure LI jusqu'à ce qu'il n'y ait plus de sommet à marquer.

Puis à l'étape E18, tous les autres sommets non marqués dans l'ensemble de lèvres LE n'appartenant pas à la lèvre inférieure LI sont ensuite marqués comme appartenant à la lèvre supérieure LS. A cette étape, les lèvres inférieure et supérieure LI et LS sont ainsi définies distinctement par deux ensembles de sommets de maille séparés par la légère ouverture de bouche OB entre les lèvres et par d'éventuels points frontaliers au niveau des commissures considérés comme appartenant à la lèvre supérieure LS.

En revenant à la figure 3, le procédé d'animation faciale se poursuit par des étapes E2 et E3 pour positionner et définir des muscles faciaux modélisés particulièrement spécialisés dans l'ouverture de la bouche et pour déterminer une zone inférieure ZI et une zone supérieure ZS dans la tête TE afin de limiter l'action des muscles spécialisés et commander des animations indépendantes de l'une des lèvres par rapport à l'autre et ainsi la séparation des lèvres LI et LS.

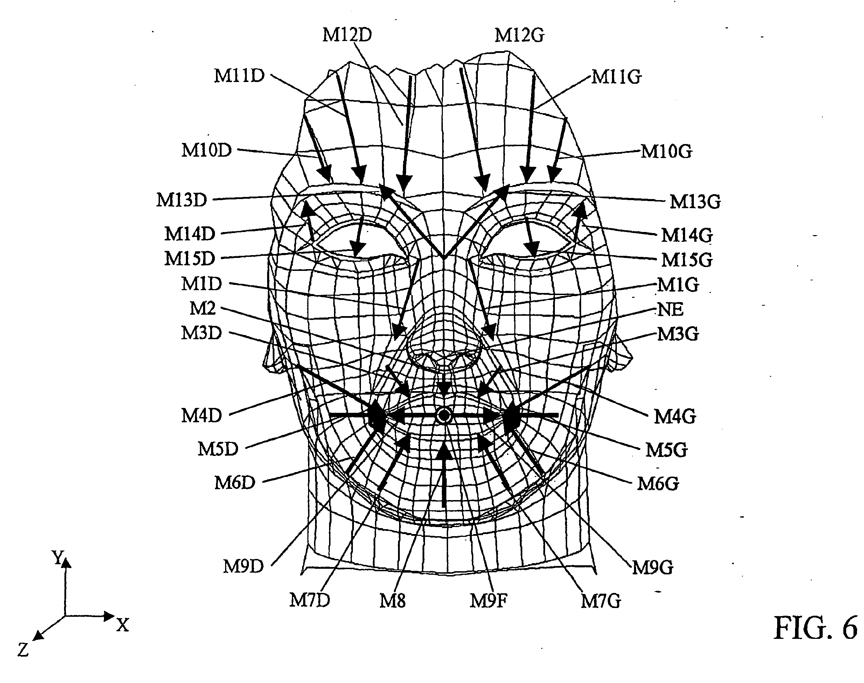

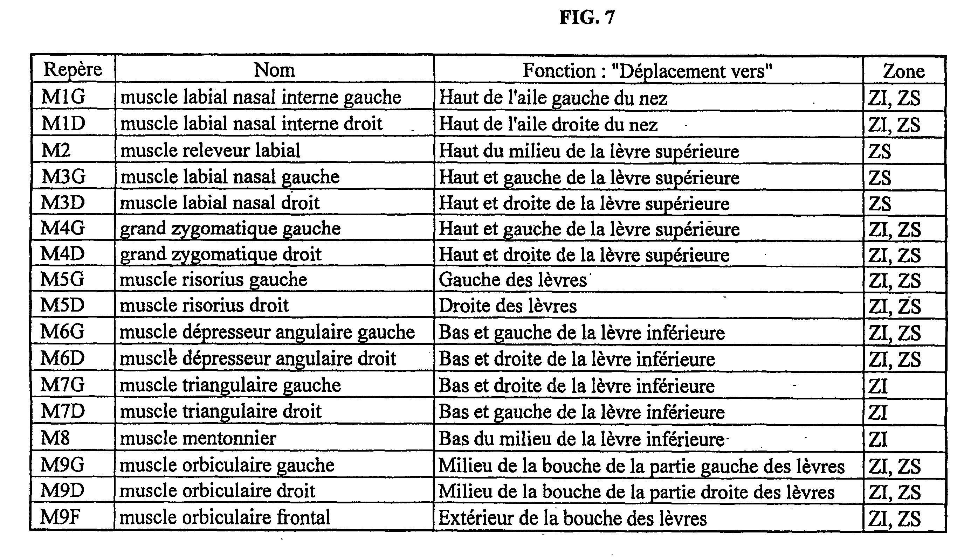

Comme montré à la figure 6 et énoncé dans le tableau de la figure 7, l'étape E2 définit un groupe de 17 muscles contrôlant le mouvement des lèvres dans une zone située sensiblement sous le nez et symétrique par rapport à un plan médian antéro-postérieur AP de la tête TE. En variante, l'étape E2 peut être effectuée à la suite de l'étape initiale E0. Les dix-sept muscles sont les suivants :

- des muscles labiaux nasaux internes gauche et droit M1G et M1D s'étendant obliquement le long des ailes du nez et vers le bas ;
- un muscle releveur labial central M2 dont le point d'attache est situé sous la cloison médiane du nez et s'étendant vers le bas jusqu'au sillon sous-nasal $S_{sup}$ de la lèvre supérieure LS (figure 4) ;
- des muscles labiaux nasaux internes gauche et droit M3G et M3D dont les points d'attache sont sensiblement à la naissance des narines et s'étendant sensiblement verticalement vers le bas jusqu'au contour externe $C_{ex}$ sensiblement entre le sommet $S_{sup}$ marquant le sillon sous-nasal et les commissures ;

- des grands zygomatiques gauche et droit M4G et M4D respectivement attachés sensiblement au-dessus des oreilles et s'étendant obliquement sensiblement jusqu'aux sommets externes $S_{exg}$ et $S_{exd}$ des commissures ;

- des muscles risorius gauche et droit M5G et M5D s'étendant sensiblement horizontalement depuis le milieu des joues jusqu'aux sommets externes des commissures ;

- des muscles dépresseurs angulaires gauche et droit M6G et M6D s'étendant sensiblement obliquement vers le haut latéralement au menton jusqu'aux sommets externes des commissures ;

- des muscles triangulaires gauche et droit M7G et M7D s'étendant sensiblement verticalement vers le haut depuis des éminences du menton jusqu'au contour externe $C_{ex}$ de la lèvre inférieure LI entre le sommet inférieur $S_{inf}$ et les sommets externes des commissures ;

- un muscle mentonnier M8 s'étendant verticalement depuis la fossette du menton jusqu'au sommet inférieur $S_{inf}$ de la lèvre inférieure LI ;

- des muscles orbiculaires droit, gauche et frontal M9G, M9D et M9F qui ont des points d'attache au milieu MO (figure 4) de l'ouverture de bouche qui est situé entre les sommets centraux en vis-à-vis sur le contour interne $C_{in}$, et qui sont dirigés respectivement vers les sommets $S_{ing}$ et $S_{ind}$ du segment de l'ouverture de bouche OB et horizontalement vers l'intérieur de la bouche.

Les trois muscles orbiculaires M9G, M9D et M9F agissent comme un sphincter afin de constituer un muscle annulaire autour de la bouche, centré sur le milieu MO, par exemple pour simuler la prononciation de la lettre O.

Les dix-sept muscles modélisés énoncés ci-dessus et spécialisés dans l'ouverture de la bouche et plus particulièrement dans l'animation des lèvres ont selon l'invention des actions limitées dans des zones d'influence prédéterminées respectives pour permettre la séparation des lèvres. Pour obtenir cette séparation, l'étape E3 définit une zone inférieure ZI et une zone supérieure ZS sur le visage afin de limiter l'action de certains de ces muscles à des sommets respectifs de l'une ou des deux zones ZI et ZS, comme indiqué dans la colonne droite du tableau à la figure 7.

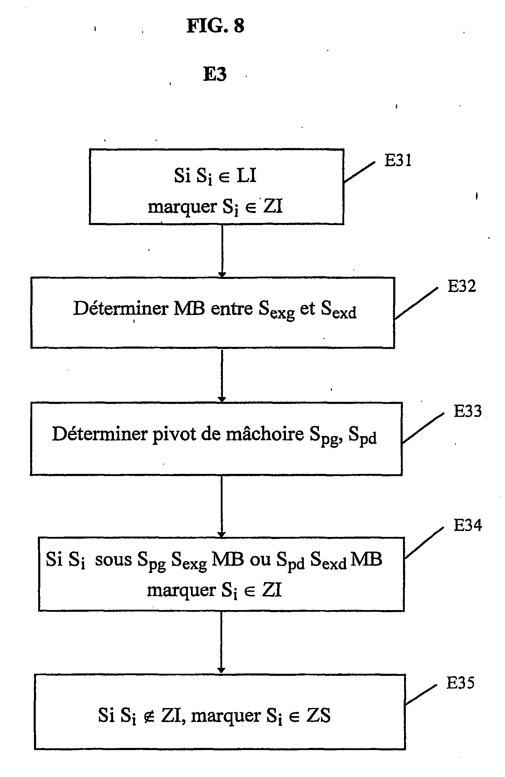

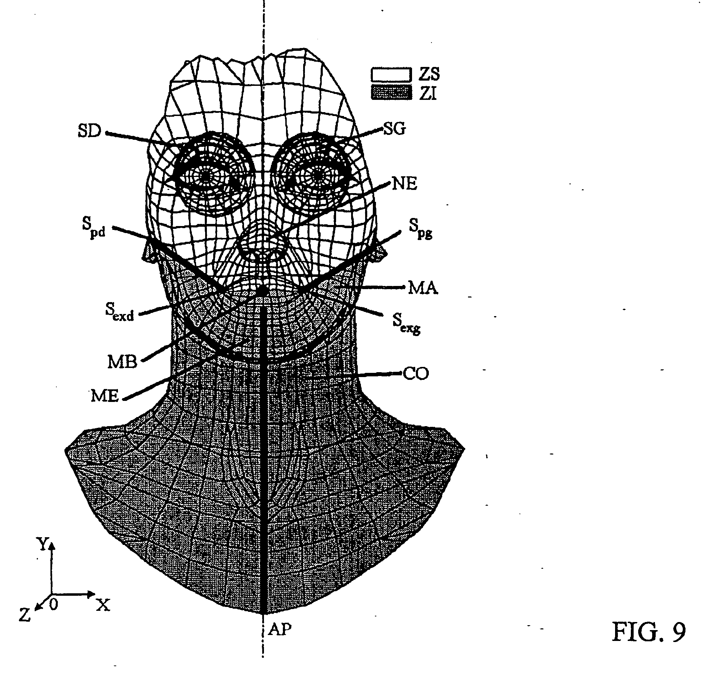

Comme montré en détail à la figure 8 en relation avec la figure 9, l'une des deux zones ZI et ZS, par exemple la zone inférieure ZI, est déterminée par cinq étapes E31 à E35.

A l'étape E31, tous les sommets de maille $S_i$ de la lèvre inférieure LI dans l'ensemble de mailles LE sont marqués comme appartenant à la zone inférieure ZI du visage. A l'étape E32, le milieu MB de la bouche est déterminé comme étant le milieu du segment entre les sommets externes $S_{exg}$ et $S_{exd}$ des commissures de lèvres détectés précédemment à l'étape E13 (figure 5) comme étant les plus extrêmes selon le contour extérieur $C_{ex}$. Des sommets d'axe de pivotement de mâchoire gauche et droit $S_{pg}$ et $S_{pd}$ sont déterminés à l'étape E33 sensiblement à la base des oreilles pour marquer un axe de pivotement horizontal des mâchoires et particulièrement de la mâchoire inférieure, comme montré à la figure 2.

A l'étape suivante E34, tous les sommets de maille $S_i$ de la tête et particulièrement de l'ensemble de mailles superficielles appelé "peau du visage", situés sous le segment $S_{pg}$ $S_{exg}$ sur la projection de profil gauche (non représentée) pour les sommets situés à gauche du milieu de bouche MB, c'est-à-dire à gauche du plan médian antéro-postérieur AP de la tête TE, sont marqués comme appartenant à la zone inférieure ZI. De même, tous les sommets de l'ensemble de mailles "peau du visage" situés sous le segment $S_{pd}$ $S_{exd}$ sur la projection de profil droit montrée à la figure 2, pour les sommets situés à droite du milieu de bouche MB, c'est-à-dire à droite du plan médian antéro-postérieur AP de la tête TE, sont marqués comme appartenant à la zone inférieure ZI. La zone inférieure est ainsi située sous une ligne brisée joignant les sommets d'axe de pivotement $S_{pg}$ $S_{pd}$ à travers le segment entre les sommets externes de commissure $S_{exg}$ et $S_{exd}$.

Puis à l'étape E35, tous les autres sommets de maille de la tête et particulièrement de l'ensemble "peau du visage" sont marqués comme appartenant à la zone supérieure ZS de la tête.

A la figure 9, la partie maillée ombrée représente la zone inférieure ZI et la partie maillée claire représente la zone supérieure ZS.

Comme montré dans la colonne droite du tableau à la figure 7 en relation avec la figure 6, les muscles M2, M3G et M3D au-dessus de la lèvre supérieure LS n'agissent que dans la zone supérieure ZS, les muscles M7G, M7D et M8 au-dessous de la lèvre inférieure ZI n'agissent que dans la zone inférieure ZI de manière à écarter et rapprocher les lèvres. Les autres muscles du tableau de la figure 7 situés latéralement à la bouche déplacent chacun à la fois des sommets de maille dans les zones inférieure et supérieure de manière à étirer et rétracter les lèvres latéralement ou obliquement.

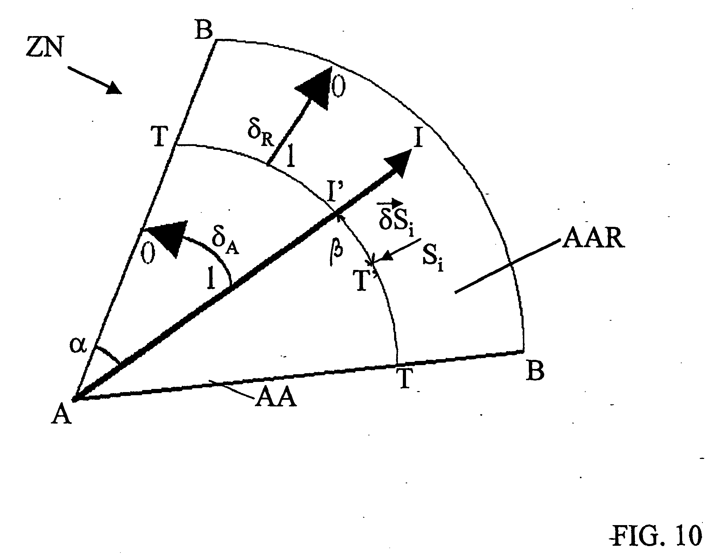

L'invention adopte un modèle musculaire montré à la figure 10 quelque peu similaire à celui préconisé par WATERS, tenant compte de l'élasticité de la peau dans la contraction musculaire elle-même, ce qui évite de longs et fastidieux calculs.

Un muscle modélisé est attaché sur la tête maillée exclusivement par deux points, bien souvent confondus avec des sommets de maille, qui sont représentés par l'origine et l'extrémité orientée d'un vecteur musculaire $\overrightarrow{AI}$.

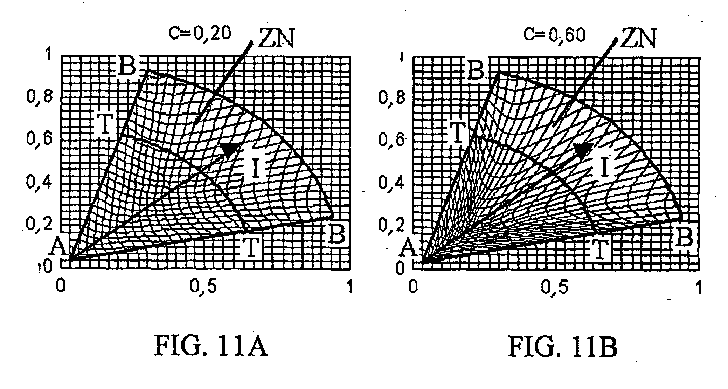

L'origine du vecteur constitue un point d'attachement A du muscle considéré comme la racine du muscle, puisque d'un point de vue biologique, il est attaché à l'ossature de la tête TE. L'extrémité orientée constitue un point d'insertion I du muscle dans la chair. Pendant la contraction, le point d'attachement A et le point d'insertion I restent immobiles et le muscle agit comme un champ magnétique convergent, attirant les sommets de maille $S_i$ situés dans une zone d'influence conique ZN à proximité du vecteur $\overrightarrow{AI}$, en direction de l'origine A du vecteur, comme cela est visible dans les figures 11A et 11B pour des contractions de 20% et 60% du muscle modélisé selon l'invention. La zone d'influence ZN du muscle correspond à un cône de révolution avec des génératrices AB, un axe suivant le vecteur $\overrightarrow{AI}$, un angle d'ouverture $\alpha$ et une base sphérique BB de centre A. La zone d'influence conique ZN contient complètement le vecteur $\overrightarrow{AI}$, comme montré à la figure 10.

Le muscle modélisé vectoriel $\overrightarrow{AI}$ est défini par les paramètres suivants dans la zone d'influence ZN :

- un angle d'ouverture circulaire $\alpha$ qui définit, pour un angle $\beta = IAS_i$ relatif à la direction du vecteur de déplacement $\overrightarrow{\delta S_i}$ d'un sommet de maille $S_i$ par rapport à l'axe AI de la zone d'influence ZN, la limite à ne pas dépasser pour que le sommet $S_i$ soit déplacé dans la zone d'influence ZN du muscle lors d'une contraction de celui-ci ;
- une zone d'atténuation angulaire et radiale AAR de la contraction du muscle délimitée par un tronc de cône à génératrice TB et bases sphériques concentriques TT et BB, située à la périphérie sphérique de la zone d'influence ZN et contenant l'extrémité orientée I du vecteur $\overrightarrow{AI}$, avec une largeur prédéterminée TB à l'intérieur de laquelle les sommets de maille $S_i$ sont déplacés par le muscle de plus en plus lorsque le sommet $S_i$ est situé à proximité du point d'intersection I' du segment musculaire AI et de la petite base TT ;
- une zone d'atténuation angulaire AA de la contraction du muscle délimitée par un cône entre le sommet A et la petite base TT, à l'intérieur de laquelle les sommets de maille $S_i$ sont déplacés par le muscle de plus en plus lorsque le sommet $S_i$ est situé à proximité du segment musculaire AI et du sommet A.

Les sommets $S_i$ se trouvant sur la périphérie de la zone d'influence ZN, c'est-à-dire sur la surface conique de génératrice AB et sur la grande base sphérique BB sont immobiles lors de la contraction du muscle. Lorsque l'angle $\beta = IAS_i$ augmente pour atteindre l'angle $\alpha$, une atténuation $\delta$ du déplacement est de plus en plus prépondérante ($\delta \approx 0$), ce qui empêche de faire apparaître une frontière accentuée entre les sommets déplacés et leurs voisins qui ne le sont pas. Le déplacement d'un sommet de maille $S_i$ est calculé par l'addition d'un vecteur de déplacement $\overrightarrow{\delta S_i}$ opposé au vecteur $\overrightarrow{AS_i}$, aux coordonnées X, Y, Z du sommet $S_i$ selon la relation suivante :

$$\overrightarrow{\delta S_i} = -C.\delta.\ \overrightarrow{AS_i}\ ,$$

dans laquelle C est un pourcentage de contraction C du muscle, et $\delta$ un coefficient d'atténuation égal au produit d'un coefficient d'atténuation angulaire $\delta_A$ et d'un coefficient d'atténuation radiale $\delta_R$ qui sont les suivants :

$$\delta_A = \frac{\cos\beta - \cos\alpha}{1 - \cos\alpha}$$

$$\delta_R = \cos\left(\left(\|T'S_i\| / \|TB\|\right)(\pi/2)\right)$$

avec $\delta = \delta_A \cdot \delta_R$ si $\|AS_i\| > \|AT\|$
et $\delta = \delta_A$ et $\delta_R = 1$ si $\|AS_i\| \le \|AT\|$,
et T' l'intersection de $AS_i$ avec la base TT.

Le coefficient d'atténuation $\delta_A$ est propre à l'invention et dépend de la distance angulaire $\beta$ entre les vecteurs $\overrightarrow{A\,S_i}$ et $\overrightarrow{AI}$. La contraction maximum, c'est-à-dire lorsque $\overrightarrow{\delta\,S_i} = -C.\overrightarrow{A\,S_i}$ est obtenue uniquement pour les sommets inclus dans le segment AI' où $\beta = 0$ et $\delta_A = \delta = 1$, le point I' étant le sommet qui peut être le plus déplacé. Le coefficient d'atténuation $\delta_R$ est fonction de la distance radiale entre les points $S_i$ et T' et ne varie que dans la zone tronconique AAR entre 0 et 1 depuis la petite base TT vers la grande base BB.

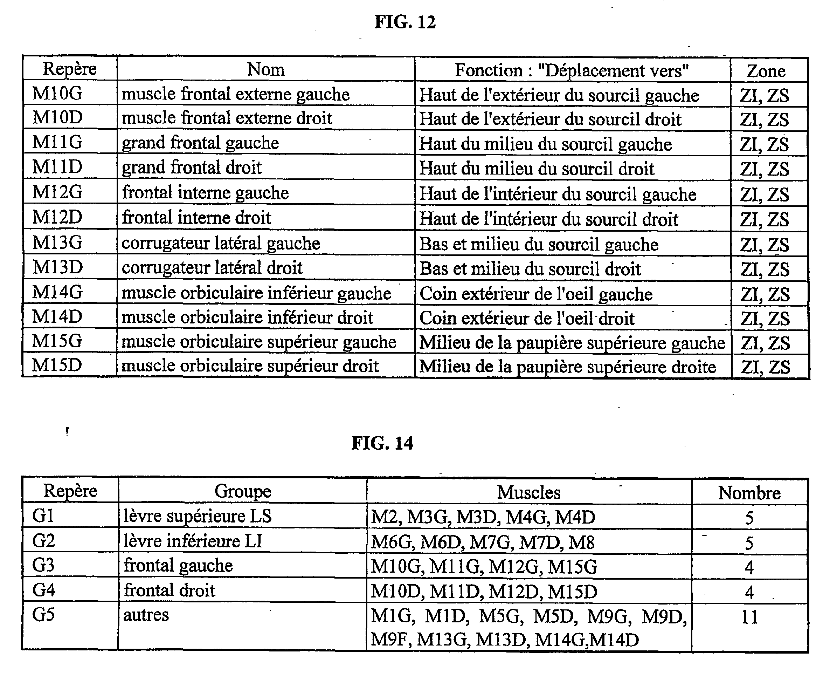

Comme cela est visible également à la figure 6, d'autres muscles faciaux modélisés localisés sur le frontal de la tête sont prévus pour animer les sourcils gauche et droit SG et SD. Ces muscles modélisés indiqués dans le tableau montré à la figure 12 sont :

- des muscles frontaux externes gauche et droit M10G et M10D, frontaux gauche et droit M11G, M11D, et grands frontaux gauche et droit M12G et M12D qui sont attachés au front et respectivement s'étendant vers le bas sensiblement jusqu'aux extrémités externes, milieu et extrémités internes des sourcils gauche et droit SG et SD ;
- deux muscles corrugateurs latéraux gauche et droit M13G et M13D qui sont attachés sensiblement latéralement au sommet du nez et dirigés vers le haut respectivement jusqu'aux sourcils gauche et droit entre les points d'attache des muscles M11G - M12G et M11D-M12D.
- des muscles orbiculaires inférieurs gauche et droit M14G et M14D et supérieurs gauche et droit M15G et M15D qui sont attachés respectivement aux coins extérieurs des yeux et au milieu des paupières supérieures PAG et PAD, et qui respectivement s'étendent vers le haut sensiblement vers les extrémités externes des sourcils et vers le bas sensiblement vers les milieux des paupières inférieures afin de descendre les extrémités extérieures des sourcils et de remonter les paupières.

Comme déjà dit, quand un muscle agit sur un sommet de maille $S_i$, il génère un vecteur de déplacement $\overrightarrow{\delta\,S_i}$ qu'il faut ajouter aux coordonnées du sommet $S_i$ pour obtenir le sommet déplacé. Cependant, lorsqu'un sommet de maille $S_i$ est situé dans plusieurs zones d'influence de muscle sécantes et donc subit l'action de ces muscles, l'addition des vecteurs de déplacement sans précaution engendre un déplacement du sommet de maille résultant de l'addition des vecteurs qui peut être exagéré. Le sommet déplacé peut se trouver attiré plus loin que les points d'attachement des muscles modélisés ayant contribué aux déplacements.

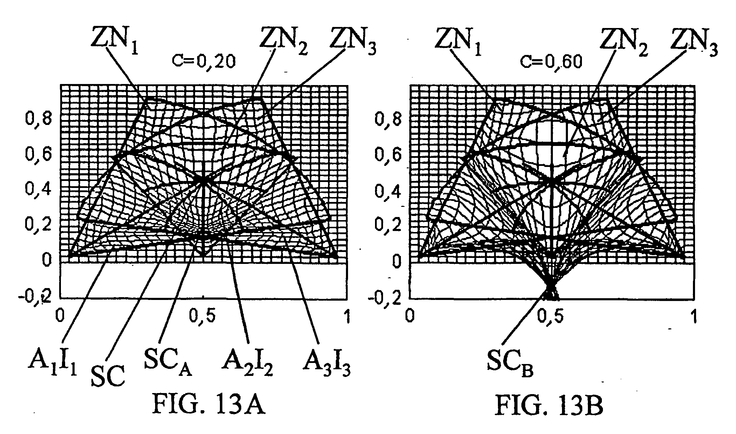

Par exemple, trois muscles $\overrightarrow{A_1 I_1}$, $\overrightarrow{A_2 I_2}$ et $\overrightarrow{A_3 I_3}$ ont des zones d'influence sécantes $ZN_1$, $ZN_2$ et $ZN_3$ montrées à la figure 13A. Les vecteurs musculaires de ces trois muscles concourent en un sommet de maille commun SC. L'addition de l'action de ces trois vecteurs avec une contribution de C = 20% pour chacun d'eux sur les sommets de maille communs, tels que le sommet SC, communs aux trois zones d'influence conserve les sommets déplacés $SC_A$ dans les zones d'influence. Par contre, lorsque le pourcentage de contraction C est plus élevé, par exemple égal à 60%, comme montré à la figure 13B, l'application des vecteurs résultant de l'addition de la contribution des trois muscles $A_1 I_1$, $A_2 I_2$ et $A_3 I_3$ sur les sommets de maille communs, tels que le sommet SC, engendre des sommets déplacés $SC_B$ qui sont tirés en dehors des zones d'influence $ZN_1$, $ZN_2$ et $ZN_3$, ce qui est impossible en pratique.

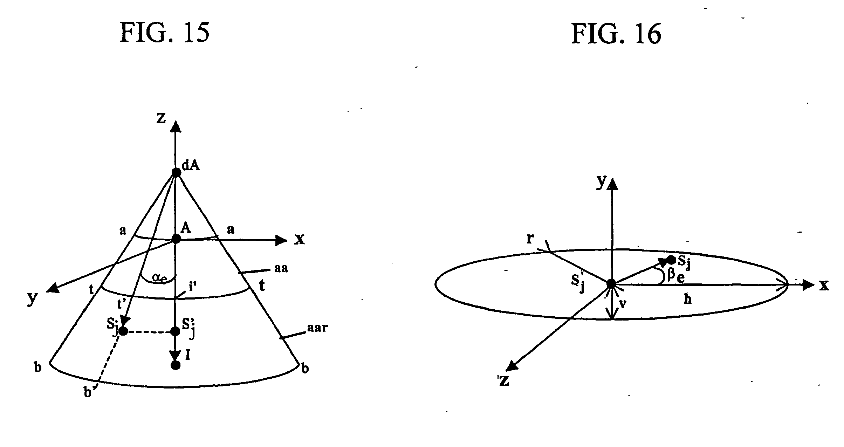

Pour surmonter cet inconvénient, l'étape E4 classe les muscles modélisés faciaux pour constituer des groupes G1 à G5 suivant leur orientation selon le tableau montré à la figure 14.

Le premier groupe G1 concerne les muscles M2, M3G, M3D, M4G et M4D attachés à la lèvre supérieure LS et ayant des zones d'influence sécantes au moins deux à deux entre muscles voisins pour déplacer des sommets de maille $S_i$ dans la lèvre LS et sous le nez NE. Le deuxième groupe G2 concerne les muscles M6G, M6D, M7G, M7D et M8 attachés à la lèvre inférieure LI et ayant des zones d'influence sécantes au moins deux à deux entre muscles voisins pour déplacer des sommets de maille $S_i$ dans la lèvre LI et le menton ME. Le troisième groupe G3 concerne les muscles frontaux gauches M10G, M11G, M12G et M15G situés sensiblement dans la partie frontale gauche et ayant des zones d'influence sécantes au moins deux à deux, de manière analogue à la figure 13A, pour déplacer des sommets de maille frontaux $S_i$ sensiblement dans le sourcil SG et/ou la paupière PAG et/ou au-dessus de ceux-ci. De même, le quatrième groupe G4 concerne les muscles frontaux droits M10D, M11D, M12D et M15D symétriques des muscles M10G, M11G, M12G et M15G respectivement.

Dans chacun des quatre premiers groupes G1, G2, G3 et G4, le vecteur de déplacement d'un sommet de maille $S_i$ est déterminé en additionnant les vecteurs de déplacement résultant de l'action des muscles du groupe susceptibles d'agir sur le sommet de maille $S_i$ afin d'obtenir un vecteur résultant, puis en le tronquant de telle façon que le module du vecteur résultant soit égal au plus grand module des vecteurs de déplacement des muscles devant agir.

Par exemple, si les trois muscles précités $A_1I_1$, $A_2I_2$ et $A_3I_3$ illustrés aux figures 13A et 13B appartiennent à l'un des quatre groupes G1 à G4 et ont des zones d'influence $ZN_1$, $ZN_2$ et $ZN_3$ contenant en commun au moins un sommet de maille $S_i$, par exemple comme les muscles M3D, M2 et M3G dans le premier groupe G1, ou les muscles M7D, M8 et M7G dans le deuxième groupe G2, le sommet $S_i$ est déplacé selon l'invention d'un vecteur ayant la direction du vecteur résultant égal à la somme des vecteurs de déplacement $\overrightarrow{\delta S_{i1}}$, $\overrightarrow{\delta S_{i2}}$ et $\overrightarrow{\delta S_{i3}}$ des trois muscles, soit :

$$\overrightarrow{\delta S_i} = \overrightarrow{\delta S_{i1}} + \overrightarrow{\delta S_{i2}} + \overrightarrow{\delta S_{i3}}$$

$$\overrightarrow{\delta S_i} = - C_1 . \delta_1 . \overrightarrow{A_1 S_i} - C_2 . \delta_2 . \overrightarrow{A_2 S_i} - C_3 . \delta_3 . \overrightarrow{A_3 S_i}$$

et ayant le module du vecteur $\overrightarrow{\delta S_i}$ lorsque :

$$\left\| \overrightarrow{\delta S_i} \right\| \leq \sup \left( \left\| \overrightarrow{\delta S_{i1}} \right\|, \left\| \overrightarrow{\delta S_{i2}} \right\|, \left\| \overrightarrow{\delta S_{i3}} \right\| \right)$$

et un module égal au plus grand "sup" des trois modules dans le cas contraire. Dans les relations précédentes, $C_1$, $C_2$ et $C_3$ désignent des contractions respectives des trois muscles $A_1I_1$, $A_2I_2$ et $A_3I_3$ ; et $\delta_1$, $\delta_2$ et $\delta_3$ désignent des coefficients d'atténuation dépendant respectivement de l'emplacement du sommet $S_i$ dans les zones d'influence $ZN_1$, $ZN_2$ et $ZN_3$.

Le dernier groupe G5 comprend divers muscles et particulièrement des muscles modélisés M4G, M4D, M5G, M5D, M6G, M6D, M9G, M9D et M9F ayant des zones d'influence pour déplacer chacun des sommets qui sont pour partie dans la zone supérieure ZS sensiblement au-dessus de la lèvre inférieure LI et pour partie dans la zone supérieure ZI sensiblement au-dessous de la lèvre supérieure LS, ce qui permet à ces muscles d'étirer et rétracter les lèvres.

Le groupe G5 comprend également des muscles qui sont choisis de telle façon qu'un sommet ne puisse être dans la zone d'influence que d'un seul muscle, ou que les déplacements soient orthogonaux. Le groupe G5 comprend ainsi des muscles modélisés M5G et M5D attachés respectivement aux commissures de lèvres $S_{exg}$ et $S_{exd}$ et ayant des zones d'influence indépendantes pour déplacer respectivement et indépendamment en opposition des sommets de maille vers l'extérieur des commissures de lèvres $S_{exg}$ et $S_{exd}$, et des muscles modélisés M9G, M9D et M9F attachés au milieu de la bouche et ayant des zones d'influence indépendantes pour déplacer respectivement et indépendamment des sommets de maille vers les commissures de lèvres $S_{exg}$ et $S_{exd}$ et vers l'intérieur de la bouche.

En variante, un muscle modélisé vectoriel $\overrightarrow{AI}$ dont les points d'attache sont l'origine A et l'extrémité orientée I du vecteur, est défini par des paramètres dans une zone d'influence zn à base elliptique, comme montré aux figures 15 et 16. Les paramètres sont sensiblement analogues à ceux définis pour la zone d'influence ZN montrée à la figure 10 et sont désignés ci-après par des minuscules correspondantes. Ils sont, outre les deux points d'attache :

- un déplacement "disp" vers l'arrière de l'origine A du vecteur $\overrightarrow{AI}$ à l'opposé de l'extrémité orientée I, jusqu'à un point dA tel que :

$$\text{disp } \overrightarrow{AI} = A - dA$$

**8**

afin qu'en particulier, pour des muscles courts, les efforts ne convergent pas d'une manière très dense vers l'origine A , mais semblent converger vers le point "arrière" dA ;

- deux angles d'ouverture elliptique $\alpha_{eh}$ et $\alpha_{ev}$ dans les plans xz et yz dus aux sections à contour elliptique de la zone d'influence zn perpendiculaires à la direction du secteur $\overrightarrow{AI}$, et à la base ellipsoïdale bb terminant la zone d'influence zn devant l'extrémité 1 ; si 2h et 2e désignent le grand axe et le petit axe d'une section elliptique de centre s'$_j$ sur l'axe vertical Z colinéaire au segment AI et S$_j$ un sommet de maille à la même côte que S'$_j$ dans la zone d'influence zn, les coordonnées x et y du sommet S$_j$ sont tels que :

$$(x^2/h^2) + (y^2/v^2) = 1$$

soit avec $\beta_e$ = IdAS$_j$ relatif à la direction du vecteur de déplacement $\overrightarrow{\delta S_j}$ du sommet S$_j$ par rapport à l'axe z de la zone d'influence :

$$r^2 = (S_j S'_j)^2 = 1/[\sin^2\beta_e/h^2 + \cos^2\beta_e/v^2]$$

$$h = \left\|dA S'_j\right\| \text{ tg } \alpha_{eh}$$

$$v = \left\|dA S'_j\right\| \text{ tg } \alpha_{ev}$$

- une zone d'atténuation angulaire et radiale aar de la contraction du muscle délimitée par un tronc de cône à génératrice tb et bases ellipsoïdales concentriques tt et bb, située à la périphérie ellipsoïdale de la zone d'influence zn et contenant l'extrémité orientée I du vecteur $\overrightarrow{AI}$, avec une largeur prédéterminée tb à l'intérieur de laquelle les sommets de maille S$_j$ sont déplacés par le muscle de plus en plus lorsque le sommet S$_j$ est situé à proximité du point d'intersection i' du segment musculaire AI et de la petite base tt ;
- une zone d'atténuation angulaire aa de la contraction du muscle délimitée par un tronc de cône à petite base aa autour de l'origine A et la base intermédiaire tt, à l'intérieur de laquelle les sommets de maille S$_j$ sont déplacés par le muscle de plus en plus lorsque le sommet S$_j$ est situé à proximité du segment musculaire AI et du sommet A.

On notera que la zone conique de base aa et de sommet dA n'appartient pas à la zone d'influence zn.
Les sommets S$_j$ se trouvant sur la périphérie de la zone d'influence zn, c'est-à-dire sur la surface conique de génératrice ab et sur la grande base sphérique bb sont immobiles lors de la contraction du muscle. Lorsque la distance radiale S'$_j$S$_j$ augmente pour atteindre le rayon de la section elliptique correspondante, une atténuation $\delta_e$ du déplacement est de plus en plus prépondérante ($\delta_e \approx 0$), ce qui empêche de faire apparaître une frontière accentuée entre les sommets déplacés et leurs voisins qui ne le sont pas. Le déplacement d'un sommet de maille S$_j$ est calculé par l'addition d'un vecteur de déplacement $\overrightarrow{\delta S_j}$ opposé au vecteur $\overrightarrow{dAS_j}$, aux coordonnées x, y, z du sommet S$_j$ selon la relation suivante :

$$\overrightarrow{\delta S_j} = -C_e . \delta_e . \overrightarrow{dAS_j},$$

dans laquelle $C_e$ est un pourcentage de contraction $C_e$ du muscle, et $\delta_e$ un coefficient d'atténuation égal au produit d'un coefficient d'atténuation angulaire $\delta_{eA}$ et d'un coefficient d'atténuation radiale $\delta_{eR}$ qui sont les suivants :

$$\delta_{eA} = (r^2 - \|S'_j S_j\|)/r^2$$

$$\delta_{eR} = (\|AI\|/\|dAI\|) \cos[((\|dAS_j\| - \|dAt'\|) / (\|dAS'_j\| - \|dAt'\|)) (\pi/2)]$$

avec $\delta_e = \delta_{eA} \cdot \delta_{eR}$ si $\|dAS_j\| > \|dAt\|$
et $\delta_e = \delta_{eA} = \|AI\|/\|dAI\|$ et $\delta_{eR} = 1$ si $\|dAa\| \le \|dAS_j\| \le \|dAt\|$
et t' l'intersection de $dAS_j$ avec la base tt.

Le muscle modélisé à zone d'influence zn fonctionne d'une manière analogue au muscle modélisé à zone d'influence ZN.

Selon une variante mixte, les muscles de la tête sont pour partie définis avec une zone d'influence ZN (figure 10), et pour partie avec une zone d'influence zn (figures 15 et 16).

L'animation faciale selon l'invention comprend également une animation paramétrique d'autres organes tels que les yeux et les paupières supérieures, la mâchoire inférieure et le cou dont les paramètres sont définis à l'étape E5 de la figure 5 qui est montrée à la suite de l'étape d'association E4, bien qu'elle puisse être effectuée avant, par exemple après l'étape initiale E0.

A l'étape initiale E0, les ensembles de mailles relatifs aux yeux, c'est-à-dire aux blancs de l'oeil gauche BOG et de l'oeil droit BOD contenant respectivement les iris et pupille gauches et les iris et pupille droits, ainsi que relatifs aux paupières gauche PAG et droite PAD sont parfaitement définis. Les ensembles BOG, BOD sont supposés être sensiblement des demi-sphères, et les ensembles PAG et PAD des portions de sphère.

Pour animer un oeil donné, par exemple l'oeil droit BOG, un centre de rotation RO de l'oeil et un axe de rotation AP de la paupière correspondante PAD sont recherchés à des étapes E51 et E52 montrées à la figure 15.

L'étape E51 recherche automatiquement deux sommets de maille $S_i$ et $S_j$ les plus éloignés l'un de l'autre dans l'ensemble de mailles relatif au blanc de l'oeil correspondant BOG. Les deux sommets les plus éloignés $S_i$ et $S_j$ définissent les extrémités d'un segment formant un diamètre de la demi-sphère de l'oeil, et le milieu du segment diamétral entre ces deux sommets définit le centre de rotation RO de l'oeil. L'étape E51 est répétée pour chaque oeil. Puisque le visage au repos est en vue de face parallèle au plan XOY et en vue de profil parallèle au plan YOZ, chaque oeil peut subir une rotation autour du centre respectif RO suivant les axes OX et OY pour simuler un regard vers le haut ou le bas, et/ou vers la droite ou la gauche.

L'étape E52 détermine automatiquement de façon similaire un axe de rotation AP de la paupière supérieure correspondante, en recherchant deux sommets de maille $S_i$ et $S_j$ les plus éloignés l'un de l'autre dans l'ensemble de mailles correspondant PAD. Par ces deux sommets de maille passe l'axe de rotation autour duquel l'ensemble de mailles PAD peut tourner pour simuler des ouvertures et fermetures de la paupière. L'étape E52 est répétée pour l'autre paupière PAG.

L'animation de la mâchoire inférieure MA agit sur des ensembles de mailles relatifs à la peau du visage.

L'étape E53 détermine' des sommets de maille en référence à la figure 2 en tant que :

- deux sommets d'axe de pivotement de mâchoire $S_{pg}$ et $S_{pd}$ qui sont en général confondus en vue de profil (figure 2) s'ils ne sont pas déjà déterminés à l'étape E33 (figure 8) ;
- un sommet mentonnier $S_{me}$ situé dans le plan médian antéro-postérieur de la tête TE et sensiblement à la naissance de la fossette mentonnière ;
- un sommet de transition tête-cou $S_{CO}$ sensiblement dans le plan médian antéro-postérieur et au sommet de l'angle entre le plancher de la bouche sous le menton et la partie antérieure du cou.

Ces trois sommets de maille définissent un secteur angulaire d'articulation de mâchoire AM de sommets $S_{pd}$ ($S_{pg}$) et de côtés $S_{pd} S_{me}$ ($S_{pg} S_{me}$) et $S_{pd} S_{CO}$.

Puis l'étape E54 détermine un secteur angulaire prédéterminé $\alpha_M$ inférieur au secteur d'articulation de mâchoire AM = $S_{me} S_{pd} S_{CO}$ = $S_{me} S_{pg} S_{CO}$, contenu dans le secteur AM à partir du côté inférieur commun $S_{pd} S_{CO}$, comme montré à la figure 2. Un sommet $S1_{CO}$ est défini à l'intersection du côté supérieur de l'angle $\alpha_M$ et du menton.

La mâchoire inférieure MA est alors définie dans la figure 2 par le secteur angulaire AM formé par les côtés $S_{pd} S_{me}$ et $S_{pd} S_{CO}$ de l'angle d'articulation AM.

A l'étape E55, les sommets $S_i$ de l'ensemble de mailles "peau du visage" compris sensiblement dans le secteur angulaire d'articulation AM sont marqués comme appartenant à la mâchoire MA. La bouche n'est pas affectée par la rotation de la mâchoire et est uniquement animée par les muscles déjà définis en référence aux figures 6 et 7.

La mâchoire tourne autour de l'axe $S_{pd} S_{pg}$ parallèle à l'axe OX, comme montré à la figure 9. De façon à éviter une collision de la mâchoire MA avec le cou CO, la rotation de la mâchoire est progressivement freinée vers le bas pour des sommets de maille dans les ensembles peau de visage et cavité buccale se trouvant dans le secteur angulaire $\alpha_M$ jusqu'à devenir nulle à proximité du segment $S_{pd} S_{CO}$. Le secteur angulaire $\alpha_M$ définit la zone à l'intérieur de laquelle la rotation de mâchoire est atténuée.

Ultérieurement, une rotation $\beta_M$ de la mâchoire MA, typiquement inférieure à 10° ou 15°, agit complètement ($\beta' = \beta_M$) sur les sommets de maille $S_i$ situés dans le secteur angulaire AM - $\alpha_M = [S_{me} S_{pd} S1_{CO}]$ en partie supérieure du secteur d'articulation AM et de manière atténuée sur les sommets de maille $S_i$ à l'intérieur du secteur angulaire $\alpha_M$. Lorsque la distance angulaire $\alpha_i = [S_{CO} S_{pd} S_i]$ entre le sommet de maille $S_i$ et le côté inférieur $S_{pd} S_{me}$ commun aux secteurs angulaires AM et $\alpha_M$ diminue, le déplacement angulaire $\beta_M$ du sommet $S_i$ initialement prévu pour la mâchoire diminue en fonction d'un coefficient d'atténuation $\delta_M$ afin que le déplacement angulaire $\beta'_M$ du sommet dans le secteur $\alpha_M$ soit :

$$\beta'_M = \beta_M . \delta_M$$

avec $\delta_M = 1 - \cos\left(\dfrac{\alpha_i}{\alpha_M} \dfrac{\pi}{2}\right)$ pour $s_i \in \alpha_M$.

Le cou CO est uniquement une partie de l'ensemble de mailles "peau du visage". L'étape E56 détermine le cou à l'aide des quatre sommets suivants de cet ensemble dans le plan médian antéro-postérieur AP de la tête :

- sommets antérieurs supérieur et inférieur $S_{sup1}$ et $S_{inf1}$ situés sensiblement au-dessous du sommet $S_{CO}$ et au-dessus de la naissance du buste BU, le long du profil antérieur du cou ; et
- sommets postérieurs supérieur et inférieur $S_{sup2}$ et $S_{inf2}$ sensiblement au niveau du milieu MB de la bouche et au-dessus de la naissance du dos, le long du profil postérieur du cou.

L'étape suivante E57 marque les sommets de maille $S_i$ de l'ensemble de mailles "peau du visage" comme appartenant au cou CO lorsqu'ils sont compris sensiblement entre les plans latéraux passant par les sommets supérieurs $S_{sup1}$ et $S_{sup2}$ et inférieurs $S_{inf1}$ et $S_{inf2}$. Puis à l'étape E58, tous les autres sommets de l'ensemble "peau du visage" n'appartenant pas au cou, ainsi que tous les autres sommets dans tous les autres ensembles de maille de la tête, à l'exception de l'ensemble inférieur concernant le buste BU, sont explorés au-dessus du sommet antérieur supérieur $S_{sup1}$ pour être marqués comme appartenant à la tête TE.

L'étape E59 détermine automatiquement un centre de rotation CRT de la tête confondu avec le centre du volume englobant les sommets de maille appartenant au cou CO. Bien que le centre de rotation CRT soit sensiblement en avant du centre de rotation réel de la tête, l'effet visuel de la rotation de la tête obtenu ainsi est satisfaisant.

La rotation de la tête est associée à une atténuation de la rotation au niveau du cou entre les plans de traces $S_{sup1} S_{sup2}$ et $S_{inf1} S_{inf2}$.

L'étape E60 détermine des ordonnées minimale et maximale $Y_{min}$ et $Y_{max}$ des sommets $S_{sup1}$, $S_{sup2}$, $S_{inf1}$ et $S_{inf2}$ définissant le cou en fonction des ordonnées $Y_{sup1}$, $Y_{sup2}$, $Y_{inf1}$ et $Y_{inf2}$ de ces quatre sommets telles que :

$$Y_{min} = \min(Y_{sup1}, Y_{sup2}, Y_{inf1}, Y_{inf2})$$

$$Y_{max} = \max(Y_{sup1}, Y_{sup2}, Y_{inf1}, Y_{inf2})$$

Une rotation ultérieure $\beta_T$ de la tête TE, typiquement inférieure à 10° à 15°, agit complètement ($\beta'_T = \beta_T$) sur les sommets de maille situés au-dessus du plan latéral passant par les sommets supérieurs $S_{sup1}$ et $S_{sup2}$ et de manière atténuée sur les sommets de maille $S_i$ à l'intérieur du cou CO. Plus le sommet de maille $S_i$ est proche du plan latéral du cou passant par les sommets inférieurs $S_{inf1}$ et $S_{inf2}$, plus le déplacement angulaire $\beta_T$ du sommet de maille $S_i$ initialement prévu pour la tête TE diminue en fonction d'un rapport entre la différence de l'ordonnée $Y_{Si}$ du sommet de

maille $S_i$ et l'ordonnée minimale et la hauteur maximale $(Y_{max} - Y_{min})$ du cou, afin que le déplacement $\beta'_T$ du sommet $S_i$ dans le cou soit:

$$\beta'_T = \beta_T . \delta_T$$

$$\delta_T = \frac{(Y_{Si} - Y_{min})}{(Y_{max} - Y_{min})}$$

A titre d'exemples sont décrites ci-après deux réalisations d'un système interactif client-serveur pour la mise en oeuvre du procédé d'animation faciale selon l'invention.

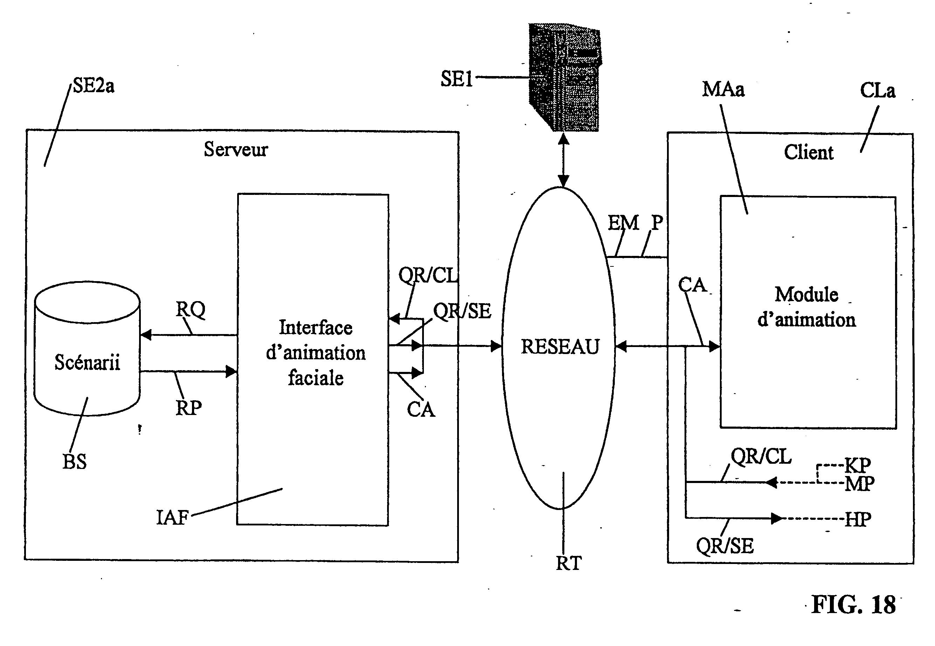

Dans une première réalisation à vocation pédagogique montrée à la figure 18, le client CLa est un micro-ordinateur d'un élève comprenant un module d'animation MAa en tant que moyen de traitement de données dans lequel est implémenté un moteur d'animation faciale selon l'invention. Le module d'animation MAa a acquis préalablement des ensembles de mailles EM et des paramètres P de la tête TE d'un "professeur" qui sont téléchargés depuis un serveur SE1 proposant plusieurs têtes de professeur à l'élève. Ces ensembles de mailles et paramètres définissant la tête du professeur et téléchargés dans le module MAa sont tout ou partie des suivants :

- des ensembles de mailles EM modélisant la tête du professeur en trois dimensions selon le langage VRML (Virtual Reality Modelling Language) ; et
- des paramètres P nécessaires à la définition des animations paramétriques et musculaires déjà définies dans la description précédente :

- mâchoire : $S_{pd}$ ($S_{pg}$), $S_{me}$, $S_{CO}$, $\alpha_M$ (figure 2);
- cou : $S_{inf1}$, $S_{inf2}$, $S_{sup1}$, $S_{sup2}$ (figure 2) ;
- muscles (figures 6, 7 et 12) : A, I, ZN selon la figure 10 et/ou A, I, zn selon la variante montrée aux figures 15 et 16,

où les paramètres $S_{pd}$, $S_{pg}$, $S_{me}$, $S_{CO}$, $S_{inf1}$, $S_{inf2}$, $S_{sup1}$, $S_{sup2}$, A et I sont des sommets de maille repérés chacun par un numéro de maille et un numéro de sommet de la maille,

AT et AB et/ou dAt et dAb sont exprimés en fraction du module du vecteur $\overrightarrow{AI}$,

$\alpha_M$, $\alpha$ et/ou $\alpha_{eh}$, $\alpha_{ev}$ et $\beta_e$ sont des angles exprimés en degrés.

Le serveur SE2a du système client-serveur selon la première réalisation, faisant office de professeur, comprend une interface d'animation faciale IAF et une base de scénarii BS. L'interface IAF reçoit des messages numériques de type question ou réponse QR/CL du microphone MP ou du clavier KP du client CLa afin de les interpréter en des requêtes RQ appliquées à la base BS qui sélectionne des réponses RP selon un scénario prédéterminé. Une réponse RP est interprétée par l'interface IAF de manière à fournir d'une part un message de type question ou réponse QR/SE vers le haut-parleur HP du client CLa, d'autre part des commandes d'animation CA au module d'animation MAa pour animer la tête du professeur visualisée sur l'écran du client CLa en harmonie avec le message transmis QR/SE.

Par exemple une application du type professeur-élève selon cette première réalisation consiste à réviser des leçons par l'élève par l'intermédiaire de questions-réponses échangées avec le professeur. Dans ce type d'application, le client-élève CLa reste connecté au serveur-professeur SE2a pendant toute la session de la leçon et est complètement piloté par le serveur-professeur.

Les commandes d'animation CA ne sont pas liées au moteur d'animation contenu dans le module MAa du client et servent à commander l'animation de la tête du professeur en fonction des réponses RP fournies par la base BS. Les commandes d'animation CA ainsi que les messages QR/CL et QR/SE sont échangés entre le client CLa et le serveur SE2a selon cette première réalisation à travers un réseau de télécommunication RT ; par exemple le serveur SE2a est une application logicielle dans un site du réseau internet ou dans un serveur physique d'un réseau intranet. A titre d'exemples non exhaustifs, les commandes d'animation CA concernent tout ou partie des animations faciales suivantes :

- tourner la tête TE de X degrés autour de l'axe OX, de Y degrés autour de l'axe OY et de Z degrés autour de l'axe OZ ;
- tourner l'oeil droit BOD ou gauche BOG de X degrés autour de l'axe OX et de Y degrés autour de l'axe OY ;

- tourner la paupière droite PAD ou gauche PAG de Q degrés autour de l'axe respectif droit APA ou gauche ;
- prononcer un texte avec une voix synthétique et amplifiée de manière à produire l'animation labiale correspondante ;
- prononcer un son de manière à produire l'animation labiale correspondante ;
- choisir une expression neutre du visage de la tête ;
- jouer une émotion, joie ou tristesse, par exemple avec un pourcentage prédéterminé.

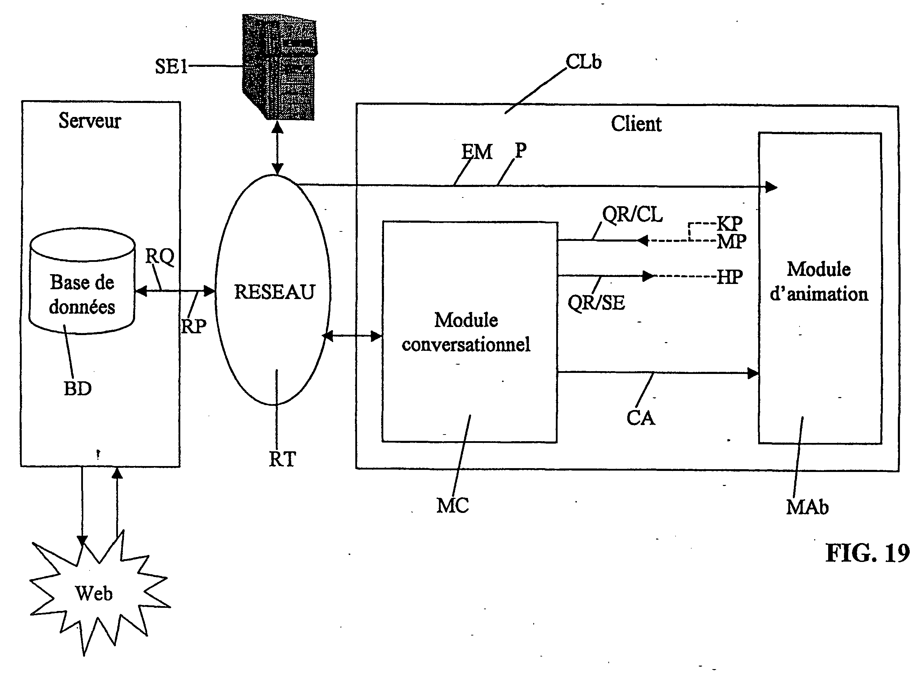

La deuxième réalisation du système client-serveur montrée à la figure 19 est plus localisée matériellement dans un client CLb qui est un micro-ordinateur domestique installé au domicile d'un usager. Le client CLb contient également un module d'animation MAb dans lequel est implémenté un moteur d'animation selon l'invention, ainsi qu'un deuxième module logiciel, dit module conversationnel MC. Ce module MC joue un rôle sensiblement équivalent à l'interface d'animation faciale IAF selon la première réalisation et rend plus autonome le client CLb que le client CLa. Le moteur d'animation a acquis préalablement des ensembles de mailles EM et des paramètres P définissant une tête d'un animateur soit lors de l'installation du client CLb, soit ultérieurement en consultant le premier serveur SE1. Le module conversationnel MC fait appel à de l'intelligence artificielle et joue le rôle de "confident" auprès de l'usager. Ainsi ce "confident" s'occupe de tâches diverses pour la gestion du domicile de l'usager, telles que la régulation en température d'une chaudière, la gestion d'un système d'alarme et/ou la participation à de la maintenance, ainsi que le recueil d'informations auprès de divers serveurs, tel que le serveur SE3 montré à la figure 7. Les serveurs SE3 mettent à disposition des bases de données, y compris de scénarii, BD pour y consulter diverses informations, telles que des horaires de cinéma, des bulletins météorologiques, des listes de restaurants, etc.

Le module conversationnel MC acquiert des réponses RP à des requêtes RQ adressées à l'un des serveurs SE3 de manière à animer la tête de l'animateur visualisée sur l'écran du client CLb en fonction de commandes d'animation CA telles que définies ci-dessus, soit en direct, soit en différé. Par exemple, si l'usager souhaite connaître des horaires de cinéma ou un bulletin météorologique, il formule un message QR/CL au module conversationnel MC par l'intermédiaire du microphone MP ou du clavier KP du client CLb, et le module MC retransmet immédiatement un message de réponse QR/SE vers le haut-parleur HP du client CLb avec des commandes d'animation correspondantes CA appliquées au module MAb si le module conversationnel a déjà enregistré les horaires de cinéma ou le bulletin météorologique. Dans le cas contraire, le module conversationnel MAb interroge via un réseau de télécommunication RT, le serveur correspondant SE3 pour y lire les horaires ou le bulletin qui seront ensuite transmis en différé à l'usager à travers le module d'animation MAb afin que l'usager consulte en soirée les horaires du cinéma, ou au réveil le bulletin météorologique

Dans cette deuxième réalisation, le client matériel CLb présente un modèle client-serveur de traitement entre les modules MAb et MC, et une combinaison client-serveur de données avec le serveur SE3.

Ces deux réalisations de système client-serveur présentées ci-dessus n'ont avantageusement aucune contrainte temporelle puisque les commandes d'animation CA pour le module d'animation MAa, MAb ne sont pas prédéfinies mais sont exécutées en temps réel en fonction des messages QR/SE du "serveur" IAF, MC. Les commandes d'animation sont synchronisées au niveau du module d'animation MAa, MAb du client, et non au niveau du serveur, ce qui évite tout décalage temporel entre la diction et l'animation labiale.

**Revendications**

1.   Procédé pour animer une tête imagée en trois dimensions (TE) acquise dans un moyen de traitement de données sous forme d'ensembles de mailles parmi lesquels un ensemble de lèvres, au moyen de muscles faciaux modélisés dont un premier groupe de muscles modélisés s'étend vers la lèvre supérieure (LS) pour déplacer des sommets de maille dans la lèvre supérieure (LS) et sous le nez (NE) de la tête, **caractérisé en ce qu'**il comprend les étapes de :

- distinguer (E1) des lèvres inférieure et supérieure (LI, LS) dans l'ensemble de lèvres (LE) en fonction de sommets de maille ($S_{exg}$, $S_{exd}$, $S_{ing}$, $S_{ind}$) au niveau d'une frontière de commissure de lèvre et d'ouverture de bouche (BO),
- déterminer (E3) des zones inférieure et supérieure (ZI, ZS) de la tête partagées sensiblement par au moins ladite frontière, et
- constituer (E4) le premier groupe (G1) de muscles modélisés (M2, M3G, M3D, M4G, M4D) ayant des zones d'influence sécantes au moins deux à deux situées dans la zone supérieure (ZS), un deuxième groupe (G2) de muscles modélisés (M6G, M6D, M7G, M7D, M8) s'étendant vers la lèvre inférieure (LI) et ayant des zones d'influence sécantes au moins deux à deux situées dans la zone inférieure (ZI) pour déplacer des sommets de maille dans la lèvre inférieure (LI) et dans le menton (ME) de la tête, et un dernier groupe de muscles modélisés (M4G, M4D, M5G, M5D, M6G, M6D, M9G, M9D, M9F) ayant des zones d'influence pour déplacer chacun des sommets de maille dans les zones supérieure et inférieure afin d'étirer et rétracter les lèvres.

**2.** Procédé conforme à la revendication 1, selon lequel ledit dernier groupe comprend des muscles modélisés (M5G, M5D) s'étendant respectivement jusqu'aux commissures de lèvres ($S_{exg}$, $S_{exd}$) et ayant des zones d'influence indépendantes pour déplacer respectivement et indépendamment en opposition des sommets de maille vers l'extérieur des commissures de lèvres.

**3.** Procédé conforme à la revendication 1 ou 2, selon lequel ledit dernier groupe comprend des muscles modélisés (M9G, M9D, M9F) attachés au milieu de la bouche et ayant des zones d'influence indépendantes pour déplacer respectivement et indépendamment des sommets de maille vers les commissures ($S_{exg}$, $S_{exd}$) de lèvres et vers l'intérieur de la bouche (BO).

**4.** Procédé conforme à l'une quelconque des revendication 1 à 3, selon lequel l'étape de distinguer (E1) comprend les étapes suivantes de :

- repérer (E11) des sommets de maille en périphérie de l'ensemble de lèvres (LE) pour définir des contours intérieur et extérieur ($C_{in}$, $C_{ex}$) des lèvres,
- détecter (E12, E13) des sommets de maille ($S_{exg}$, $S_{ing}$, $S_{ind}$, $S_{exd}$) les plus extrêmes latéralement sur les contours intérieur et extérieur ($C_{in}$, $C_{ex}$),
- marquer (E14, E15) des sommets de maille strictement inférieurs à l'un des segments de commissures de lèvres définis par les sommets précédemment détectés, comme appartenant à la lèvre inférieure LI,
- marquer récursivement (E16, E17) tous les sommets de maille non marqués en commençant par des sommets voisins d'un sommet inférieur ($S_{inf}$) de la lèvre inférieure (LI), comme appartenant à la lèvre inférieure, et
- marquer (E18) tous les autres sommets non marqués dans l'ensemble de lèvres (LE) n'appartenant pas à la lèvre inférieure (LI) comme appartenant à la lèvre supérieure (LS).

**5.** Procédé conforme à la revendication 4, selon lequel l'étape de déterminer (E3) comprend les étapes suivantes de :

- déterminer (E32) le milieu (MB) d'un segment entre les sommets externes ($S_{exg}$, $S_{exd}$) comme les plus extrêmes latéralement détectés sur le contour extérieur ($C_{ex}$) des lèvres,
- déterminer (E33) des sommets d'axe de pivotement de mâchoire ($S_{pg}$, $S_{pd}$),
- marquer (E34) tous les sommets situés sous une ligne brisée joignant les sommets d'axe de pivotement ($S_{pg}$, $S_{pd}$) à travers le segment entre les sommets externes ($S_{exg}$, $E_{exd}$) comme appartenant à la zone inférieure (ZI), et
- marquer (E35) tous les autres sommets de maille de la tête comme appartenant à la zone supérieure (ZS).

**6.** Procédé conforme à l'une quelconque des revendications 1 à 5, selon lequel un muscle modélisé est défini par une zone d'influence conique (ZN) ayant un angle d'ouverture $\alpha$, **caractérisé en ce qu'**un sommet de maille ($S_i$) compris dans la zone d'influence est soumis à un vecteur de déplacement ($\overrightarrow{\delta S_i}$) qui est dirigé vers le sommet (A) de la zone d'influence conique en faisant un angle $\beta$ avec l'axe (AI) de la zone d'influence et qui est proportionnel à un coefficient d'atténuation angulaire $\delta_A$ tels que:

$$\delta_A = \frac{\cos\beta - \cos\alpha}{1 - \cos\alpha}$$

**7.** Procédé conforme à l'une quelconque des revendications 1 à 5, selon lequel un muscle modélisé est défini par un vecteur d'origine A et d'extrémité orientée I dans une zone d'influence tronconique (zn) de sommet dA, ayant deux angles d'ouverture elliptique, dans laquelle un sommet de maille $S_j$ situé à une distance radiale $S'_j S_j$ de l'axe de la zone dans une section elliptique de rayon r passant par le sommet est soumis à un vecteur de déplacement qui est dirigé vers le sommet dA de la zone d'influence et qui est proportionnel à un coefficient d'atténuation angulaire $\delta_{eA}$ et à un coefficient d'atténuation radiale $\delta_{eR}$ tels que :

$$\delta_{eA} = (r^2 - \|S'_j S_j\|)/r^2$$

$$\delta_{eR} = (\|AI\|/\|dAI\|) \cos[((\|dAS_j\|-\|dAt'\|) / (\|dAS_j\|-\|dAt'\|))(\pi/2)]$$

et $\delta_e = \delta_{eA} = \|AI\|/\|dAI\|$ et $\delta_{eR} = 1$
si $\|dAa\| \le \|dAS_j\| \le \|dAt\|$
où t' est l'intersection de $dAS_j$ avec une base intermédiaire t entre une petite base a et une grande base b de la zone.

**8.** Procédé conforme à l'une quelconque des revendications 1 à 7, selon lequel, lorsque le sommet de maille (SC) est situé dans plusieurs zones d'influence sécantes ($ZN_1$, $ZN_2$, $ZN_3$) de muscles ($A_1I_1$, $A_2I_2$, $A_3I_3$), le sommet de maille ($S_i$) est déplacé d'un vecteur de déplacement ($\delta S_i$) déterminé en additionnant des vecteurs de déplacement résultant de l'action desdits muscles afin d'obtenir un vecteur résultant, puis en tronquant le vecteur résultant afin que le vecteur résultant ait un module égal au plus grand module des vecteurs de déplacement des muscles.

**9.** Procédé conforme à l'une quelconque des revendications 1 à 8, selon lequel est constitué un groupe (G3 ; G4) de muscles frontaux modélisés (M10G, M11G, M12G, M15G, M10D, M11D, M12D, M15D) respectivement s'étendant vers le bas sensiblement jusqu'aux extrémités externes, aux milieux et aux extrémités internes de sourcils (SG ; SD) et aux milieux de paupières (PAG, PAD), et ayant des zones d'influence sécantes au moins deux à deux pour déplacer des sommets de maille au moins dans les sourcils et les paupières.

**10.** Procédé conforme à l'une quelconque des revendication 1 à 9, comprenant une étape de détermination de paramètres (E5) pour animer au moins l'un des organes suivants : un oeil (BOG, BOD), une paupière (PAG, PAD), une mâchoire inférieure (MA), un cou (CO).

**11.** Procédé conforme à la revendication 1 à 10, comprenant une étape (E51) de déterminer un centre de rotation (RO) d'un oeil en tant que milieu d'un segment ayant pour extrémités deux sommets de maille les plus éloignés dans un ensemble de mailles relatif au blanc de l'oeil (BOD).

**12.** Procédé conforme à l'une quelconque des revendication 1 à 11, comprenant une étape (E52) de déterminer un axe de rotation (APA) d'une paupière passant par deux sommets de maille les plus éloignés dans un ensemble de mailles (PAD) relatif à ladite paupière.

**13.** Procédé conforme à l'une quelconque des revendication 1 à 12, comprenant les étapes de :

- déterminer (E53) des sommets de maille en tant que sommets d'axe de pivotement de mâchoire ($S_{pg}$, $S_{pd}$), sommet mentonnier ($S_{me}$) et sommet de transition tête-cou ($S_{CO}$) pour définir un angle d'articulation de mâchoire AM,
- déterminer (E54) un secteur angulaire prédéterminé $\alpha_M$ inférieur au secteur d'articulation AM contenu dans celui-ci et ayant un côté inférieur ($S_{pd}$, $S_{CO}$) commun avec celui-ci, et
- marquer (E55) des sommets de maille compris sensiblement dans le secteur angulaire d'articulation AM, afin qu'une rotation de la mâchoire (MA) agisse complètement sur des sommets de maille situés dans un secteur angulaire AM - $\alpha_M$ et de manière atténuée sur des sommets de maille à l'intérieur du secteur angulaire $\alpha_M$ de sorte que, lorsque la distance angulaire $\alpha_i$ entre un sommet de maille et le côté inférieur commun ($S_{pd}$, $S_{CO}$) diminue, le sommet de maille soit déplacé en fonction d'un coefficient d'atténuation tel que :

$$1 - \cos\left(\frac{\alpha_i}{\alpha_M} \, \frac{\pi}{2}\right).$$

**14.** Procédé conforme à l'une quelconque des revendication 1 à 13, comprenant les étapes de :

- déterminer (E56) des sommets antérieurs supérieur et inférieur ($S_{sup1}$, $S_{inf1}$) et postérieurs supérieur et inférieur ($S_{sup2}$, $S_{inf2}$) du cou (CO) ;
- marquer (E57) des sommets de maille compris sensiblement entre des plans latéraux passant par les sommets supérieurs et inférieurs ($S_{sup1}$ $S_{sup2}$, $S_{inf1}$ $S_{inf2}$) comme appartenant au cou ;
- marquer (E58) tous les sommets de maille dans la tête qui n'appartiennent pas au cou ;

- déterminer (E59) un centre de rotation (CRT) de la tête comme centre du volume englobant les sommets de maille appartenant au cou ;
- déterminer (E60) des ordonnées minimale et maximale $Y_{min}$ et $Y_{max}$ des sommets supérieurs et inférieurs du cou, afin qu'une rotation ultérieure de la tête (TE) agisse complètement sur des sommets de maille situés au-dessus du plan latéral passant par les sommets supérieurs ($S_{sup1}$, $S_{sup2}$) et de manière atténuée sur les sommets de maille à l'intérieur du cou (CO) de sorte que plus le sommet de maille ($S_i$) d'ordonnée $Y_{Si}$ est proche du plan latéral passant par les sommets inférieurs ($S_{inf1}$, $S_{inf2}$), plus le déplacement angulaire du sommet de maille diminue en fonction d'un rapport tel que :

$$\frac{(Y_{Si} - Y_{min})}{(Y_{max} - Y_{min})}$$

**15.** Système client-serveur, **caractérisé en ce que** le client (CLa) comprend un moyen de traitement de données (MAa) ayant acquis une tête imagée en trois dimensions (TE) sous forme d'ensembles de mailles (EM) et de paramètres (P) selon le procédé conforme à l'une quelconque des revendications 1 à 14, pour animer la tête en fonction de commandes d'animation (CA), et le serveur (SE2a) est un serveur de traitement pour convertir des réponses (RP) lues dans une base de données (BS) adressée par des requêtes (RQ) correspondant à des messages (QR/CL) transmis par le client (CLa), en des messages (QR/SE) et des commandes d'animation (CA) transmis au client (CLa).

**16.** Système client-serveur, **caractérisé en ce que** le serveur (SE3) est un serveur de base de données, et le client (CLb) comprend un moyen de traitement de données (MAb) ayant acquis une tête imagée en trois dimensions (TE) sous forme d'ensembles de mailles (EM) et de paramètres (P) selon le procédé conforme à l'une quelconque des revendications 1 à 14, pour animer la tête en fonction de commandes d'animation (CA), et comprend également un moyen conversationnel (MC) pour convertir des réponses (RP) lues dans le serveur de base de données (SE3) adressé par des requêtes (RQ) correspondant à des messages (QR/CL) fournies dans le client, en des messages (QR/SE) appliqués dans le client et des commandes d'animation (CA) transmises au moyen de traitement de données (MAb).

**17.** Système client-serveur conforme à la revendication 15 ou 16, dans lequel les ensembles de mailles (EM) et les paramètres (P) sont sélectionnés et acquis depuis un serveur prédéterminé (SE1).

**18.** Système client-serveur conforme à l'une quelconque des revendications 15 à 17, dans lequel les ensembles de mailles et les paramètres sont tout ou partie des suivants : des ensembles de mailles (EM) modélisant la tête (TE) en trois dimensions ; des paramètres (P) nécessaires à la définition d'animations notamment de la mâchoire ($S_{pd}$ ($S_{pg}$), $S_{me}$, $S_{CO}$, $\alpha_M$), du cou ($S_{inf1}$, $S_{inf2}$, $S_{sup1}$, $S_{sup2}$) et de muscles (A, I, T, B, $\alpha$).

**19.** Système client-serveur conforme à l'une quelconque des revendications 15 à 18, dans lequel les commandes d'animation (CA) concernent tout ou partie des animations faciales suivantes : tourner la tête (TE), tourner un oeil (BOD, BOG), tourner une paupière (PAD, PAG), prononcer un texte, prononcer un son, choisir une expression neutre du visage de la tête, jouer une émotion.

**Claims**

**1.** Method for animating a head (TE) imaged in three dimensions and acquired in a data processor in the form of sets of meshes including a set of lips, by means of modelled facial muscles among which a first group of modelled muscles extends towards the upper lip (LS) for displacing mesh nodes in the upper lip (LS) and under the nose (NE) of the head, which method is **characterized in that** it includes the steps of:

- distinguishing (E1) lower and upper lips (LI, LS) in the set of lips (LE) as a function of mesh nodes ($S_{exg}$, $S_{exd}$, $S_{ing}$, $S_{ind}$) at the level of a lip corner and a mouth opening (BO) boundary,
- determining (E3) upper and lower zones (ZI, ZS) of the head noticeably shared by at least said boundary, and
- constituting (E4) the first group (G1) of modelled muscles (M2, M3G, M3D, M4G, M4D) having at least pairwise intersecting areas of influence situated in the upper zone (ZS), a second group (G2) of modelled muscles (M6G, M6D, M7G, M7D, M8) extending towards the lower lip (LI) and having at least pairwise intersecting areas of influence situated in the lower zone (ZI) for displacing mesh nodes in the lower lip (LI) and in the chin (ME) of the head, and a last group of modelled muscles (M4G, M4D, M5G, M5D, M6G, M6D, M9G, M9D, M9F) having areas of influence for displacing each of the mesh nodes in the upper and lower zones in order to stretch and contract the lips.

2.  Method according to Claim 1, whereby said last group includes modelled muscles (M5G, M5D) extending respectively as far as the corners of the lips ($S_{exg}$, $S_{exd}$) and having independent areas of influence for respectively and independently moving mesh nodes in opposite directions towards the exterior of the corners of the lips.

3.  Method according to Claim 1 or Claim 2, whereby said last group includes modelled muscles (M9G, M9D, M9F) attached to the middle of the mouth and having independent areas of influence for respectively and independently displacing mesh nodes towards the corners of the lips ($S_{exg}$, $S_{exd}$) and towards the interior of the mouth (BO).

4.  Method according to any of Claims 1 to 3, whereby the distinguishing step (E1) includes the following steps:

    - marking (E11) mesh nodes at the periphery of the set of lips (LE) to define interior and exterior contours ($C_{in}$, $C_{ex}$) of the lips,
    - detecting (E12, E13) the laterally outermost mesh nodes ($S_{exg}$, $S_{ing}$, $S_{ind}$, $S_{exd}$) on the interior and exterior contours ($C_{in}$, $C_{ex}$),
    - marking (E14, E15) mesh nodes strictly below one of the lip corner segments defined by the nodes previously detected as belonging to the lower lip LI,
    - recursively marking (E16, E17) all the unmarked mesh nodes, beginning with nodes adjoining a lower node ($S_{inf}$) of the lower lip (LI), as belonging to the lower lip, and
    - marking (E18) all the other unmarked nodes in the set of lips (LE) not belonging to the lower lip (LI) as belonging to the upper lip (LS).

5.  Method according to Claim 4, whereby the determining step (E3) includes the following steps:

    - determining (E32) the middle (MB) of a segment between the external nodes ($S_{exg}$, $S_{exd}$) as the laterally outermost detected on the exterior contour ($C_{ex}$) of the lips,
    - determining (E33) jaw pivot axis nodes ($S_{pg}$, $S_{pd}$),
    - marking (E34) all the nodes situated under a broken line joining the pivot axis nodes ($S_{pg}$, $S_{pd}$) through the segment between the external nodes ($S_{exg}$, $S_{exd}$) as belonging to the lower zone (ZI), and
    - marking (E35) all the other mesh nodes of the head as belonging to the upper zone (ZS).

6.  Method according to any of Claims 1 to 5, whereby a modelled muscle is defined by a conical area of influence (ZN) having a cone angle $\alpha$, **characterized in that** a mesh node ($S_i$) inside the area of influence is subjected to a

    displacement vector ($\overrightarrow{\delta S_i}$) that is directed towards the apex (A) of the conical area of influence forming an angle

    $\beta$ with the axis (AI) of the area of influence and which is proportional to an angular attenuation coefficient $\delta_A$ defined as follows:

$$\delta_A = \frac{\cos \beta - \cos \alpha}{1 - \cos \alpha}$$

7.  Method according to any of Claims 1 to 5, whereby a modelled muscle is defined by a vector having an origin A, an oriented extremity I in a frustoconical area of influence (zn) having an apex dA, and two elliptical aperture angles, in which a mesh node $S_j$ situated at a radial distance $S'_j S_j$ from the axis of the area in an elliptical section of radius r passing through the node is subjected to a displacement vector that is directed towards the node dA of the area of influence and which is proportional to an angular attenuation coefficient $\delta_{eA}$ and to a radial attenuation coefficient $\delta_{eR}$ defined as follows:

$$\delta_{eA} = (r^2 - \|S'_j S_j\|/r^2$$

$$\delta_{eR} \;=\; (\;\|AI\|\,/\,\|dAI\|\;)\; \cos[((\|dA\,S_j\|-\|dAt'\|)/(\|dA\,S_j'\|-\|dAt\|)\,)(\pi/2)\,]$$

and $\delta_e = \delta_{eA} = \|AI\|/\|dAI\|$ and $\delta_{eR} = 1$

if $\|dAa\| \leq \|dAS_j\| \leq \|dAt\|$

where t' is the intersection of $dAS_j$ with an intermediate base t between a smaller base a and a larger base b of the area.

**8.** Method according to any of Claims 1 to 7, whereby, when the mesh node (SC) is situated in a plurality of intersecting areas of influence ($ZN_1$, $ZN_2$, $ZN_3$) of muscles ($A_1I_1$, $A_2I_2$, $A_3I_3$), the mesh node ($S_i$) is displaced by a displacement vector ($\delta S_i$) determined by adding displacement vectors resulting from the action of said muscles in order to obtain a resultant vector and then truncating the resultant vector so that it has a modulus equal to the highest modulus of the muscle displacement vectors.

**9.** Method according to any of Claims 1 to 8, whereby there is constituted a group (G3; G4) of modelled frontal muscles (M10G, M11G, M12G, M15G, M10D, M11D, M12D, M15D) respectively extending downwards noticeably as far as the external, middle and internal extremities of the eyebrows (SG; SD) and to the middles of the eyelids (PAG, PAD), and having areas of influence intersecting at least two by two to displace mesh nodes at least in the eyebrows and the eyelids.

**10.** Method according to any of Claims 1 to 9, including a step (E5) of determining parameters for animating at least one of the following organs: an eye (BOG, BOD), an eyelid (PAG, PAD), a lower jaw (MA), a neck (CO).

**11.** Method according to any of Claims 1 to 10, including a step (E51) of determining a centre of rotation (RO) of an eye as the middle of a segment whose extremities are two farthest apart mesh nodes in a set of meshes relating to the white of the eye (BOD).

**12.** Method according to any of Claims 1 to 11, including a step (E52) of determining a rotation axis (APA) of an eyelid passing through two farthest apart mesh nodes in a set of meshes (PAD) related to said eyelid.

**13.** Method according to any of Claims 1 to 12, including the steps of:

- determining (E53) mesh nodes as jaw pivot axis nodes ($S_{pg}$, $S_{pd}$), a chin node ($S_{me}$) and a head-neck transition node ($S_{CO}$) to define a jaw articulation angle AM,
- determining (E54) a predetermined angular sector $\alpha_M$ less than the articulation sector AM contained in the latter and having a lower side ($S_{pd}$, $S_{CO}$) common therewith, and
- marking (E55) mesh nodes noticeably contained within the angular articulation sector (AM), in order for a rotation of the jaw (MA) to operate completely on mesh nodes situated within an angular sector AM - $\alpha_M$ and in an attenuated manner on mesh nodes within the angular sector $\alpha_M$ so that, if the angular distance $\alpha_i$ between a mesh node and the common lower side ($S_{pd}$, $S_{CO}$) decreases, the mesh node is displaced as a function of an attenuation coefficient defined as follows:

$$1 \;-\; \cos\!\left(\frac{\alpha_i}{\alpha_M}\frac{\pi}{2}\right).$$

**14.** Method according to any of Claims 1 to 13, including the steps of:

- determining (E56) upper and lower anterior nodes ($S_{sup1}$, $S_{inf1}$) and upper and lower posterior nodes ($S_{sup2}$, $S_{inf2}$) of the neck (CO);
- marking (E57) mesh nodes noticeably contained between lateral planes passing through the upper and lower nodes ($S_{sup1}$, $S_{sup2}$, $S_{inf1}$, $S_{inf2}$) as belonging to the neck;
- marking (E58) all the mesh nodes in the head that do not belong to the neck;
- determining (E59) a centre of rotation (CRT) of the head consisting of the centre of the volume encompassing the mesh nodes belonging to the neck; and
- determining (E60) minimum and maximum ordinates $Y_{min}$ and $Y_{max}$ of the upper and lower nodes of the neck, in order for a subsequent rotation of the neck (TE) to operate completely on mesh nodes situated above the lateral plane passing through the upper nodes ($S_{sup1}$, $S_{sup2}$) and in an attenuated manner on mesh nodes within the neck (CO) so that the closer the mesh node ($S_i$) with the ordinate $Y_{Si}$ to the lateral plane passing through the lower nodes ($S_{inf1}$, $S_{inf2}$), the more the angular displacement of the mesh node decreases as a function of a ratio defined as follows:

$$\frac{(Y_{Si} - Y_{min})}{(Y_{max} - Y_{min})}$$

15. Client-server system, **characterized in that** the client (CLa) includes a data processor (MAa) having acquired a head (TE) imaged in three dimensions in the form of sets of meshes (EM) and parameters (P) by the method according to any of Claims 1 to 14, for animating the head as a function of animation commands (CA), and the server (SE2a) is a processing server for converting responses (RP) read in a database (BS) addressed by requests (RQ) corresponding to messages (QR/CL) transmitted by the client (CLa) into messages (QR/SE) and animation commands (CA) transmitted to the client (CLa).

16. Client-server system, **characterized in that** the server (SE3) is a database server and the client (CLb) includes a data processor (MAb) having acquired a head (TE) imaged in three dimensions in the form of sets of meshes (EM) and parameters (P) by the method according to any of Claims 1 to 14, for animating the head as a function of animation commands (CA), and further includes conversational means (MC) for converting responses (RP) read in the database server (SE3) addressed by requests (RQ) corresponding to messages (QR/CL) provided in the client into messages (QR/SE) applied in the client and animation commands (CA) transmitted by the data processor (MAb).

17. Client-server system according to Claim 15 or Claim 16, in which the sets of meshes (EM) and the parameters (P) are selected and acquired from a predetermined server (SE1).

18. Client-server system according to any of Claims 15 to 17, in which the sets of meshes and the parameters are all or some of the following: sets of meshes (EM) modeling the head (TE) in three dimensions; parameters (P) necessary for defining animations in particular of the jaw ($S_{pd}$ ($S_{pg}$) , $S_{me}$, $S_{CO}$, $\alpha_M$), the neck ($S_{inf1}$, $S_{inf2}$, $S_{sup1}$, $S_{sup2}$) and of muscles (A, I, T, B, $\alpha$).

19. Client-server system according to any of Claims 15 to 18, in which the animation commands (CA) relate to some or all of the following facial animations: turning the head (TE), turning an eye (BOD, BOG), turning an eyelid (PAD, PAG), enunciating a text, enunciating a sound, choosing a neutral expression of the face of the head, portraying an emotion.

**Patentansprüche**

1. Verfahren zur Animation eines dreidimensional hergestellten Bildes eines Kopfes (TE), das in einem Datenverarbeitungsmittel in Form von Mascheneinheiten, darunter eine Einheit von Lippen, erfasst wird, mit Hilfe von modellisierten Gesichtsmuskeln, wobei eine erste Gruppe von modellisierten Muskeln sich zur Oberlippe (LS) erstreckt, um Maschenknoten in der Oberlippe (LS) und unter der Nase (NE) des Kopfes zu verschieben, **dadurch gekennzeichnet, dass** es die folgenden Schritte aufweist:

- Unterscheiden (E1) der Unterlippe (LI) und der Oberlippe (LS) in der Einheit von Lippen (LE) in Abhängigkeit von Maschenknoten ($S_{exg}$, $S_{exd}$, $S_{ing}$, $S_{ind}$) in Höhe einer Grenze zwischen Mundwinkel und Mundöffnung (BO),
- Bestimmen (E3) der unteren und der oberen Zonen (ZI, ZS) des Kopfes, die im Wesentlichen durch mindestens die Grenze getrennt werden, und
- Bilden (E4) der ersten Gruppe (G1) von modellisierten Muskeln (M2, M3G, M3D, M4G, M4D), die mindestens paarweise schneidende Einflusszonen haben, die sich in der oberen Zone (ZS) befinden, einer zweiten Gruppe (G2) von modellisierten Muskeln (M6G, M6D, M7G, M7D, M8), die sich zur Unterlippe (LI) erstrecken und mindestens paarweise schneidende Einflusszonen haben, die sich in der unteren Zone (ZI) befinden, um Maschenknoten in der Unterlippe (LI) und im Kinn (ME) des Kopfes zu verschieben, und einer letzten Gruppe von modellisierten Muskeln (M4G, M4D, M5G, M5D, M6G, M6D, M9G, M9D, M9F), die Einflusszonen haben, um jeden der Maschenknoten in der oberen und unteren der Zone zu verschieben, um die Lippen auseinander- und zusammenzuziehen.

2. Verfahren nach Anspruch 1, bei dem die letzte Gruppe modellisierte Muskeln (M5G, M5D) aufweist, die sich bis zu einem der Mundwinkel ($S_{exg}$, $S_{exd}$) erstrecken und unabhängige Einflusszonen haben, um jeweils und unabhängig gegenläufig Maschenknoten zur Außenseite der Mundwinkel zu verschieben.

3. Verfahren nach Anspruch 1 oder 2, bei dem die letzte Gruppe modellisierte Muskeln (M9G, M9D, M9F) aufweist, die an die Mitte des Munds gebunden sind und unabhängige Einflusszonen haben, um jeweils und unabhängig Maschenknoten zu den Mundwinkeln ($S_{exg}$, $S_{exd}$) bzw. zum Inneren des Munds (BO) zu verschieben.

4. Verfahren nach einem der Ansprüche 1 bis 3, bei dem der Unterscheidungsschritt (E1) die folgenden Schritte aufweist:

   - Markieren (E11) der Maschenknoten am Umfang der Einheit von Lippen (LE), um Innen- und Außenränder ($C_{in}$, $C_{ex}$) der Lippen zu definieren,
   - Erfassen (E12, E13) der Maschenknoten ($S_{exg}$, $S_{ing}$, $S_{ind}$, $S_{exd}$) die auf den inneren und äußeren Rändern ($C_{in}$, $C_{ex}$) seitlich am weitesten außen liegen,
   - Markieren (E14, E15) der Maschenknoten, die strikt unter einem der Mundwinkelsegmente liegen, die von den vorher erfassten Knoten definiert werden, als zur Unterlippe LI gehörig,
   - rekursives Markieren (E16, E17) aller nicht markierten Maschenknoten, beginnend mit Knoten, die einem unteren Knoten ($S_{inf}$) der Unterlippe (LI) benachbart sind, als zur Unterlippe gehörig, und
   - Markieren (E18) aller anderen nicht markierten Knoten in der Einheit von Lippen (LE), die nicht zur Unterlippe (LI) gehören, als zur Oberlippe (LS) gehörend.

5. Verfahren nach Anspruch 4, bei dem der Schritt des Bestimmens (E3) die folgenden Schritte aufweist:

   - Bestimmen (E32) der Mitte (MB) eines Segments zwischen den äußeren Knoten ($S_{exg}$, $S_{exd}$), wie den äußersten seitlich erfassten auf dem Außenrand ($C_{ex}$) der Lippen,
   - Bestimmen (E33) der Kieferschwenkachse-Knoten ($S_{pg}$, $S_{pd}$),
   - Markieren (E34) aller Knoten, die sich unter einer gestrichelten Linie befinden, die die Schwenkachse-Knoten ($S_{pg}$, $S_{pd}$) durch das Segment zwischen den äußeren Knoten ($S_{exg}$, $S_{exd}$) verbindet, als zur unteren Zone (ZI) gehörig, und
   - Markieren (E35) aller anderen Maschenknoten des Kopfes als zur oberen Zone (ZS) gehörig.

6. Verfahren nach einem der Ansprüche 1 bis 5, bei dem ein modellisierter Muskel durch eine kegelförmige Einflusszone (ZN) definiert wird, die einen Öffnungswinkel $\alpha$ hat, **dadurch gekennzeichnet, dass** ein Maschenknoten ($S_i$), der in der Einflusszone liegt, einem Verschiebungsvektor $\overrightarrow{(\delta S_i)}$ unterliegt, der zum Knoten (A) der kegelförmigen Einflusszone gerichtet ist, indem er einen Winkel $\beta$ mit der Achse (AI) der Einflusszone bildet, und der proportional zu einem Winkeldämpfungskoeffizient $\delta_A$ ist, so dass gilt:

$$\delta_A = \frac{\cos\beta - \cos\alpha}{1 - \cos\alpha}$$

7. Verfahren nach einem der Ansprüche 1 bis 5, bei dem ein modellisierter Muskel von einem Vektor mit dem Ursprung A und mit einem gerichteten Ende I in einer kegelstumpfförmigen Einflusszone (zn) mit einem Scheitel dA definiert wird, die zwei elliptische Öffnungswinkel hat, in der ein Maschenknoten $S_j$, der sich in einer radialen Entfernung $S'_j S_j$ von der Achse der Zone in einem elliptischen Sektor mit dem Radius r befindet, der durch den Knoten verläuft, einem Verschiebungsvektor unterliegt, der zum Knoten dA der Einflusszone gerichtet ist und der proportional zu einem Winkeldämpfungskoeffizient $\delta_{eA}$ und zu einem radialen Dämpfungskoeffizient $\delta_{eR}$ ist, so dass gilt:

$$\delta_{eA} = (r^2 - \|S'_j S_j\|/r^2$$

$$\delta_{eR} = (\|AI\|/\|dAI\|)\cos[((\|dAS_j\|-\|dAt'\|)/(\|dAS_j'\|-\|dAt'\|))(\pi/2)]$$

und $\delta_e = \delta_{eA} = \|AI\|/\|dAI\|$ und $\delta_{eR} = 1$
wenn gilt: $\|dAa\| \le \|dAS_j\| \le \|dAt\|$
wobei t' die Schnittstelle von $dAS_j$ mit einer Zwischenbasis t zwischen einer kleinen Basis a und einer großen Basis b der Zone ist.

8.  Verfahren nach einem der Ansprüche 1 bis 7, bei dem, wenn der Maschenknoten (SC) sich in mehreren schneidenden Einflusszonen ($ZN_1$, $ZN_2$, $ZN_3$) von Muskeln ($A_1I_1$, $A_2I_2$, $A_3I_3$) befindet, der Maschenknoten ($S_i$) um einen Verschiebungsvektor ($\delta S_i$) verschoben wird, der bestimmt wird, indem Verschiebungsvektoren addiert werden, die aus der Wirkung der Muskeln resultieren, um einen resultierenden Vektor zu erhalten, und dann, indem der resultierende Vektor gekürzt wird, damit der resultierende Vektor einen Modul gleich dem größten Modul der Verschiebungsvektoren der Muskeln hat.

9.  Verfahren nach einem der Ansprüche 1 bis 8, gemäß dem eine Gruppe (G3; G4) von modellierten Stirnmuskeln (M10G, M11G, M12G, M15G, M10D, M11D, M12D, M15D) gebildet wird, die sich nach unten im Wesentlichen bis zu den äußeren Enden, den Mitten und den inneren Enden der Augenbrauen (SG; SD) und den Lidmitten (PAG, PAD) erstrecken, indem sie mindestens paarweise schneidende Einflusszonen haben, um Maschenknoten mindestens in den Augenbrauen und den Lidern zu verschieben.

10. Verfahren nach einem der Ansprüche 1 bis 9, das einen Schritt der Bestimmung von Parametern (E5) aufweist, um mindestens eines der folgenden Organe zu animieren: ein Auge (BOG, BOD), ein Lid (PAG, PAD), einen Unterkiefer (MA), einen Hals (CO).

11. Verfahren nach einem der Ansprüche 1 bis 10, das einen Schritt (E51) der Bestimmung eines Drehzentrums (RO) eines Auges als Mitte eines Segments aufweist, das als Enden zwei Maschenknoten hat, die in einer Einheit von Maschen bezüglich der Lederhaut des Auges (BOD) am weitesten entfernt sind.

12. Verfahren nach einem der Ansprüche 1 bis 11, das einen Schritt (E52) der Bestimmung einer Drehachse (APA) eines Lids aufweist, die durch zwei Maschenknoten verläuft, die in einer Einheit von Maschen (PAD) bezüglich des Lids am weitesten entfernt sind.

13. Verfahren nach einem der Ansprüche 1 bis 12, das die folgenden Schritte aufweist:

    - Bestimmen (E53) der Maschenknoten als Enden einer Kieferschwenkachse ($S_{pg}$, $S_{pd}$), als Kinn-Beginn ($S_{me}$) und als Kopf-Hals-Übergang ($S_{CO}$), um einen Kiefergelenk-Winkel AM zu definieren,
    - Bestimmen (E54) eines vorbestimmten Winkelsektors $\alpha_M$, der unter dem Gelenksektor AM liegt, in diesem enthalten ist und mit ihm eine gemeinsame Unterseite ($S_{pd}$, $S_{CO}$) hat, und
    - Markieren (E55) der Maschenknoten, die im Wesentlichen im Gelenkwinkelsektor AM enthalten sind, damit eine Drehung des Kiefers (MA) vollständig auf Maschenknoten wirkt, die sich in einem Winkelsektor AM - $\alpha_M$ befinden, und gedämpft auf Maschenknoten wirkt, die sich innerhalb des Winkelsektors $\alpha_M$ befinden, so dass, wenn die Winkelentfernung $\alpha_i$ zwischen einem Maschenknoten und der gemeinsamen Unterseite ($S_{pd}$, $S_{CO}$) abnimmt, der Maschenknoten in Abhängigkeit von einem Dämpfungskoeffizient derart verschoben wird, dass gilt:

$$1 - \cos\left(\frac{\alpha_i}{\alpha_M}\frac{\pi}{2}\right).$$

14. Verfahren nach einem der Ansprüche 1 bis 13, das die folgenden Schritte aufweist:

    - Bestimmen (E56) der vorderen oberen und unteren Knoten ($S_{sup1}$, $S_{inf1}$) und hinteren oberen und unteren Knoten ($S_{sup2}$, $S_{inf2}$) des Halses (CO);

- Markieren (E57) der Maschenknoten, die im Wesentlichen zwischen seitlichen Ebenen liegen, die durch die oberen und unteren Knoten verlaufen ($S_{sup1}$ $S_{sup2}$, $S_{inf1}$ $S_{inf2}$), als zum Hals gehörend;
- Markieren (E58) aller Maschenknoten im Kopf, die nicht zum Hals gehören;
- Bestimmen (E59) eines Drehzentrums (CRT) des Kopfes als Zentrum des Volumens, das die zum Hals gehörenden Maschenknoten einschließt;
- Bestimmen (E60) der minimalen und maximalen Ordinate $Y_{min}$ und $Y_{max}$ der oberen und unteren Knoten des Halses, damit eine spätere Drehung des Kopfes (TE) vollständig auf Maschenknoten wirkt, die sich oberhalb der seitlichen Ebene befinden, die durch die oberen Knoten ($S_{sup1}$, $S_{sup2}$) verlaufen, und abgeschwächt auf die Maschenknoten im Inneren des Halses (CO) wirkt, so dass, je näher der Maschenknoten ($S_i$) mit der Ordinate $Y_{Si}$ der seitlichen Ebene ist, die durch die unteren Knoten ($S_{inf1}$, $S_{inf2}$) verläuft, desto stärker die Winkelverschiebung des Maschenknotens in Abhängigkeit von einem solchen Verhältnis abnimmt, so dass gilt:

$$\frac{\left(Y_{Si} - Y_{min}\right)}{\left(Y_{max} - Y_{min}\right)} .$$

15. Client-Server-System, **dadurch gekennzeichnet, dass** der Client (CLa) eine Datenverarbeitungseinrichtung {MAa) aufweist, die das dreidimensional hergestellte Bild eines Kopfes (TE) in Form von Mascheneinheiten (EM) und von Parametern (P) gemäß dem Verfahren nach einem der Ansprüche 1 bis 14 erfasst hat, um den Kopf in Abhängigkeit von Animationssteuerungen (CA) zu animieren, und dass der Server (SE2a) ein Verarbeitungsserver ist, um Antworten (RP), die in einer Datenbasis (BS) gelesen werden, an die Anforderungen (RQ) entsprechend vom Client (CLa) übertragenen Mitteilungen (QR/CL) gesendet werden, in Mitteilungen (QR/SE} und Animationssteuerungen (CA) umzuwandeln, die an den Client (CLa} übertragen werden.

16. Client-Server-System, **dadurch gekennzeichnet, dass** der Server (SE3) ein Datenbasis-Server ist, und dass der Client (CLb) ein Datenverarbeitungsmittel (MAb) enthält, das ein dreidimensionales Bild eines Kopfes (TE) in Form von Mascheneinheiten (EM) und Parametern (P) gemäß dem Verfahren nach einem der Ansprüche 1 bis 14 erfasst hat, um den Kopf in Abhängigkeit von Animationssteuerungen (CA) zu animieren, und ebenfalls ein dialogfähiges Mittel (MC) aufweist, um im Datenbasis-Server (SE3) gelesene Antworten (RP), an den Anforderungen (RQ) gesendet werden, die im Client gelieferten Mitteilungen (QR/CL) entsprechen, in Mitteilungen (QR/SE), die im Client angewendet werden, und in Animationssteuerungen (CA) umzuwandeln, die an die Datenverarbeitungseinrichtung (MAb) übertragen werden.

17. Client-Server-System nach Anspruch 15 oder 16, bei dem die Mascheneinheiten (EM) und die Parameter (P) ausgehend von einem vorbestimmten Server (SE1) ausgewählt und erfasst werden.

18. Client-Server-System nach einem der Ansprüche 15 bis 17, bei dem die Mascheneinheiten und die Parameter ganz oder ein Teil sind von: den Mascheneinheiten (EM), die den Kopf (TE) dreidimensional modellisieren; den Parametern (P), die zur Definition von Animationen insbesondere des Kiefers ($S_{pd}$ ($S_{pg}$), $S_{me}$, $S_{CO}$, $\alpha_M$), des Halses ($S_{inf1}$, $S_{inf2}$, $S_{sup1}$, $S_{sup2}$) und von Muskeln (A, I, T, B, $\alpha$) notwendig sind.

19. Client-Server-System nach einem der Ansprüche 15 bis 18, bei dem die Animationssteuerungen (CA) alle oder einen Teil der folgenden Gesichtsanimationen betreffen: Kopfdrehen (TE), Augenbewegung (BOD, BOG), Drehen eines Lids (PAD, PAG), Sprechen eines Texts, einen Ton von sich geben, einen neutralen Ausdruck des Gesichts des Kopfs wählen, eine Empfindung spielen.

FIG. 1

EP 1 299 861 B1

FIG. 2

**FIG. 3**

Maillage 3D de la tête TE ;
sous-ensembles de mailles définies — E0

Distinguer lèvres
LI et LE (FIG. 5) — E1

Positionner et définir muscles M1 à M9
pour bouche (FIGS. 6, 7 et 10) — E2

Déterminer zones ZI et ZS
(FIG. 8 et 9) — E3

Constituer des groupes de muscles (FIG. 14)

pour déterminer vecteur déplacement $\overrightarrow{\delta s_i}$ — E4

Déterminer paramètres pour animation
BOG, BOD, PAG, PAD, MA, CO
(FIG. 15) — E5

FIG. 4

**FIG. 5**
**E1**

E10
Lèvres :
ensemble de mailles LE

E11
repérer $S_i \in C_{in}$
et $S_i \in C_{ex}$

E12
détecter $S_{ing}$ et $S_{ind}$ sur $C_{in}$

E13
détecter $S_{exg}$ et $S_{exd}$ sur $C_{ex}$

E14
si $S_i \in$ maille en dessous et à gauche de $S_{exg}$ $S_{ing}$
$\Rightarrow S_i \in LI$

E15
si $S_i \in$ maille en dessous et à droite de $S_{exd}$ $S_{ind}$
$\Rightarrow S_i \in LI$

E16
marquer $S_{inf} \in LI$

E17
commencer par $S_i = S_{inf}$,
$S_j$ voisin de $S_i$ et $S_j$ entre $S_{ing}$ et $S_{ind}$
$\Rightarrow S_j \in LI$

E18
$S_i \in LE$ et
$S_i \notin LI \Rightarrow S_i \in LS$

FIG. 6

## FIG. 7

| Repère | Nom | Fonction : "Déplacement vers" | Zone |
|---|---|---|---|
| M1G | muscle labial nasal interne gauche | Haut de l'aile gauche du nez | ZI, ZS |
| M1D | muscle labial nasal interne droit | Haut de l'aile droite du nez | ZI, ZS |
| M2 | muscle releveur labial | Haut du milieu de la lèvre supérieure | ZS |
| M3G | muscle labial nasal gauche | Haut et gauche de la lèvre supérieure | ZS |
| M3D | muscle labial nasal droit | Haut et droite de la lèvre supérieure | ZS |
| M4G | grand zygomatique gauche | Haut et gauche de la lèvre supérieure | ZI, ZS |
| M4D | grand zygomatique droit | Haut et droite de la lèvre supérieure | ZI, ZS |
| M5G | muscle risorius gauche | Gauche des lèvres | ZI, ZS |
| M5D | muscle risorius droit | Droite des lèvres | ZI, ZS |
| M6G | muscle dépresseur angulaire gauche | Bas et gauche de la lèvre inférieure | ZI, ZS |
| M6D | muscle dépresseur angulaire droit | Bas et droite de la lèvre inférieure | ZI, ZS |
| M7G | muscle triangulaire gauche | Bas et droite de la lèvre inférieure | ZI |
| M7D | muscle triangulaire droit | Bas et gauche de la lèvre inférieure | ZI |
| M8 | muscle mentonnier | Bas du milieu de la lèvre inférieure | ZI |
| M9G | muscle orbiculaire gauche | Milieu de la bouche de la partie gauche des lèvres | ZI, ZS |
| M9D | muscle orbiculaire droit | Milieu de la bouche de la partie droite des lèvres | ZI, ZS |
| M9F | muscle orbiculaire frontal | Extérieur de la bouche des lèvres | ZI, ZS |

## FIG. 8

### E3

$$\text{Si } S_i \in LI$$
$$\text{marquer } S_i \in ZI$$

E31

$$\text{Déterminer MB entre } S_{exg} \text{ et } S_{exd}$$

E32

$$\text{Déterminer pivot de mâchoire } S_{pg}, S_{pd}$$

E33

$$\text{Si } S_i \text{ sous } S_{pg} S_{exg} \text{ MB ou } S_{pd} S_{exd} \text{ MB}$$
$$\text{marquer } S_i \in ZI$$

E34

$$\text{Si } S_i \notin ZI, \text{ marquer } S_i \in ZS$$

E35

FIG. 9

FIG. 10

FIG. 11A          FIG. 11B

EP 1 299 861 B1

EP 1 299 861 B1

## FIG. 12

| Repère | Nom | Fonction : "Déplacement vers" | Zone |
|---|---|---|---|
| M10G | muscle frontal externe gauche | Haut de l'extérieur du sourcil gauche | ZI, ZS |
| M10D | muscle frontal externe droit | Haut de l'extérieur du sourcil droit | ZI, ZS |
| M11G | grand frontal gauche | Haut du milieu du sourcil gauche | ZI, ZS |
| M11D | grand frontal droit | Haut du milieu du sourcil droit | ZI, ZS |
| M12G | frontal interne gauche | Haut de l'intérieur du sourcil gauche | ZI, ZS |
| M12D | frontal interne droit | Haut de l'intérieur du sourcil droit | ZI, ZS |
| M13G | corrugateur latéral gauche | Bas et milieu du sourcil gauche | ZI, ZS |
| M13D | corrugateur latéral droit | Bas et milieu du sourcil droit | ZI, ZS |
| M14G | muscle orbiculaire inférieur gauche | Coin extérieur de l'oeil gauche | ZI, ZS |
| M14D | muscle orbiculaire inférieur droit | Coin extérieur de l'oeil droit | ZI, ZS |
| M15G | muscle orbiculaire supérieur gauche | Milieu de la paupière supérieure gauche | ZI, ZS |
| M15D | muscle orbiculaire supérieur droit | Milieu de la paupière supérieure droite | ZI, ZS |

## FIG. 14

| Repère | Groupe | Muscles | Nombre |
|---|---|---|---|
| G1 | lèvre supérieure LS | M2, M3G, M3D, M4G, M4D | 5 |
| G2 | lèvre inférieure LI | M6G, M6D, M7G, M7D, M8 | 5 |
| G3 | frontal gauche | M10G, M11G, M12G, M15G | 4 |
| G4 | frontal droit | M10D, M11D, M12D, M15D | 4 |
| G5 | autres | M1G, M1D, M5G, M5D, M9G, M9D, M9F, M13G, M13D, M14G,M14D | 11 |

FIG. 13B

FIG. 13A

EP 1 299 861 B1

# FIG. 15

# FIG. 16

## FIG. 17

Pour chaque oeil, déterminer $S_i$, $S_j$ dans BOG, BOD tels que $S_i$ $S_j$ plus grand ; milieu de $S_i$ $S_j$ = R0 — E51

Pour chaque paupière, déterminer $S_i$, $S_j$ dans PAG, PAD tels que $S_i$ $S_j$ plus grand ; milieu de $S_i$ $S_j$ = AP — E52

mâchoire MA : définir $S_{pg}$, $S_{pd}$, $S_{me}$, $S_{CO}$ — E53

déterminer $\alpha_M$ < AM et $S1_{CO}$ pour atténuation de déplacement $\beta_M$ de MA — E54

si $S_i$ ∈ AM, marquer $S_i$ ∈ MA — E55

déterminer SC ou C0 : $S_{sup1}$, $S_{inf1}$, $S_{sup2}$, $S_{inf2}$ — E56

si $S_i$ ∈ [$S_{sup1}$, $S_{inf1}$ ; $S_{sup2}$, $S_{inf2}$], marquer $S_i$ ∈ C0 — E57

Si $S_i$ ∉ [$S_{sup1}$, $S_{inf1}$ ; $S_{sup2}$, $S_{inf2}$], marquer $S_i$ ∈ TE — E58

Déterminer centre CRT pour rotation TE — E59

déterminer
$Y_{min}$ = min ($Y_{sup1}$, $Y_{sup2}$ ; $Y_{inf1}$, $Y_{inf2}$)
$Y_{max}$ = max ($Y_{sup1}$, $Y_{sup2}$ ; $Y_{inf1}$, $Y_{inf2}$)
pour atténuation de déplacement $\beta_T$ de TE dans C0 — E60

FIG. 18

SE2a

Serveur

Scénarii

BS

RQ

RP

Interface d'animation faciale

IAF

QR/CL

QR/SE

CA

SE1

RESEAU

RT

EM P

CA

MAa

CLa

Client

Module d'animation

QR/CL

QR/SE

KP

MP

HP

EP 1 299 861 B1

**FIG. 19**

EP 1 299 861 B1